# EUROPEAN PATENT APPLICATION

(11) **EP 4 626 002 A1**
(43) Date of publication of application: **01.10.2025**
(21) Application number: 23894262.7
(22) Date of filing: 02.10.2023
(51) Int. Cl.: H04N 21/438, H04B 1/16, H04N 21/426, H04N 21/442

(54) **RECEPTION DEVICE AND RECEPTION METHOD**

(30) Priority: 25.11.2022 JP 2022187888
(71) Applicant: Sony Semiconductor Solutions Corporation, Atsugi-shi, Kanagawa 243-0014 (JP)
(72) Inventor: YAMAGUCHI, Toshihiro, Atsugi-shi, Kanagawa 243-0014 (JP); FURUKAWA, Jun, Atsugi-shi, Kanagawa 243-0014 (JP)
(74) Representative: MFG Patentanwälte Meyer-Wildhagen Meggle-Freund Gerhard PartG mbB
(86) International application number: PCT/JP2023/035829
(87) International publication number: WO 2024/111250

(57) **Abstract**

A period required for channel scanning for a plurality of broadcasting systems is reduced.

A reception device includes a demodulation processing unit that confirms a broadcasting system with which demodulation can be performed among a plurality of broadcasting systems in parallel on the basis of a received signal from a tuner shared by the plurality of broadcasting systems at the time of channel scanning, and performs demodulation processing with the broadcasting system with which demodulation can be performed. The demodulation processing unit may determine the broadcasting system with which demodulation can be performed from the plurality of broadcasting systems on the basis of a result of confirmation as to whether a signal that supports the broadcasting system with which demodulation can be performed is included in the received signal. Demodulation processing by the demodulation processing unit may stand by until a channel frequency of the received signal is updated to the broadcasting system with which demodulation can be performed for a broadcasting system with which it is determined that demodulation cannot be performed.

## Description

### TECHNICAL FIELD

The present technology relates to a reception device and a reception method. Specifically, the present technology relates to a reception device and a reception method capable of performing channel scanning for a plurality of broadcasting systems.

### BACKGROUND ART

Digital broadcasting may be simultaneously performed with a plurality of broadcasting systems. In this event, in order to receive digital broadcasting, channel scanning is executed in a frequency band allocated to the digital broadcasting.

Here, in order to shorten a period required for channel scanning, the channel scanning may be executed in parallel while a plurality of channels included in a frequency band in which a first broadcasting system and the second broadcasting system overlap is shared (see, for example, Patent Document 1).

### CITATION LIST

### PATENT DOCUMENT

Patent Document 1: WO 2012/056926 A

### SUMMARY OF THE INVENTION

### PROBLEMS TO BE SOLVED BY THE INVENTION

However, in the above-described related art, in a case where channel scanning is performed in parallel for a plurality of broadcasting systems with which broadcasting is performed at the same time, tuners are caused to operate for each of these broadcasting systems. Thus, control of the tuners becomes complicated, and it takes time to perform tuning, which may lead to an increase in a period required for channel scanning.

The present technology has been made in view of such a situation, and an object thereof is to reduce a period required for channel scanning for a plurality of broadcasting systems.

### SOLUTIONS TO PROBLEMS

The present technology has been made to solve the above-described problem, and a first aspect of the present technology is a reception device including a demodulation processing unit that confirms a broadcasting system with which demodulation can be performed among a plurality of broadcasting systems in parallel on the basis of a received signal from a tuner shared by the plurality of broadcasting systems at the time of channel scanning, and performs demodulation processing with the broadcasting system with which demodulation can be performed. This brings about an effect that the broadcasting system with which demodulation can be performed among the plurality of broadcasting systems is simultaneously confirmed while the tuner to be used for demodulation processing with the plurality of broadcasting systems in the channel scanning is shared.

Furthermore, in the first aspect, the demodulation processing unit may switch a broadcasting system with which demodulation is to be performed on the basis of a result of confirmation as to whether a broadcasting system is the broadcasting system with which demodulation can be performed. This brings about an effect that the demodulation with the broadcasting system with which demodulation can be performed is performed for each channel while simultaneously confirming the broadcasting system with which demodulation can be performed among the plurality of broadcasting systems.

Furthermore, in the first aspect, demodulation processing by the demodulation processing unit may stand by until a channel frequency of an input of the received signal is updated to the broadcasting system with which demodulation can be performed for a broadcasting system with which demodulation cannot be performed. This brings about an effect that the demodulation with the broadcasting system with which demodulation can be performed is performed for each channel while simultaneously confirming the broadcasting system with which demodulation can be performed among the plurality of broadcasting systems.

Furthermore, in the first aspect, the demodulation processing unit may include a first demodulation unit that supports a first broadcasting system and a second demodulation unit that supports a second broadcasting system, a received signal tuned by the tuner at the time of the channel scanning may be input in parallel to the first demodulation unit and the second demodulation unit, the first demodulation unit and the second demodulation unit may confirm in parallel whether a broadcasting system is the broadcasting system with which demodulation can be performed by each of the first demodulation unit and the second demodulation unit, the first demodulation unit may perform demodulation with the first broadcasting system on the basis of the received signal in a case where demodulation can be performed with the first broadcasting system, and the second demodulation unit may perform demodulation with the second broadcasting system on the basis of the received signal in a case where demodulation can be performed with the second broadcasting system. This brings about an effect that a broadcasting system with which demodulation can be performed between the first broadcasting system and the second broadcasting system is simultaneously confirmed while the tuner to be used for demodulation processing of the first broadcasting system and the second broadcasting system in the channel scanning is shared.

Furthermore, in the first aspect, the reception device may further include a plurality of tuners provided corresponding to the plurality of broadcasting systems, and includes a plurality of first demodulation units that supports the first broadcasting system, a plurality of second demodulation units that supports the second broadcasting system, and a plurality of analog to digital (AD) converters provided corresponding to the plurality of tuners, any one of the plurality of tuners may tune a received signal of the first broadcasting system and the second broadcasting system, and an AD converter at a subsequent stage of the tuner that tunes the received signal may input an AD converted value of the received signal to the first demodulation unit and the second demodulation unit in parallel. This brings about an effect that a broadcasting system with which demodulation can be performed between the first broadcasting system and the second broadcasting system is simultaneously confirmed while the tuner to be used for demodulation processing of the first broadcasting system and the second broadcasting system in the channel scanning is shared.

Furthermore, in the first aspect, the demodulation processing unit may perform channel scanning for the plurality of broadcasting systems on the basis of tuning operation of tuners of a number smaller than the number of systems to be used for demodulation processing with the plurality of broadcasting systems at the time of normal reception. This brings about an effect that channel scanning is performed using a smaller number of tuners than at the time of normal reception while enabling simultaneous viewing with a plurality of broadcasting systems at the time of normal reception.

Furthermore, in the first aspect, at least one of the plurality of tuners may be stopped in a state where at least one of the plurality of tuners is caused to operate at the time of the channel scanning. This brings about an effect that the demodulation processing is performed for a larger number of broadcasting systems than the number of tuners caused to operate at the time of channel scanning.

Furthermore, in the first aspect, the demodulation processing unit may perform demodulation processing of received signals of a plurality of broadcasting systems on the basis of tuning operation of any one tuner out of the plurality of tuners at the time of channel scanning for the plurality of broadcasting systems. This brings about an effect that control of the tuners is simplified in the demodulation processing at the time of channel scanning for a plurality of broadcasting systems.

Furthermore, in the first aspect, the demodulation processing unit may include a shared circuit in which a circuit is shared by the plurality of broadcasting systems, and the demodulation processing unit may perform confirmation as to whether a broadcasting system is the broadcasting system with which demodulation can be performed by using the shared circuit and confirmation as to whether synchronization acquisition can be performed using some circuits in parallel. This brings about an effect that the broadcasting system with which demodulation can be performed among the plurality of broadcasting systems is simultaneously confirmed while some circuits are shared in the demodulation processing with the plurality of broadcasting systems.

Furthermore, in the first aspect, the reception device may further include a first demodulation set including any one of the plurality of first demodulation units and any one of the plurality of second demodulation units as a set, and a second demodulation set including another one of the plurality of first demodulation units and another one of the plurality of second demodulation units as a set, and the AD converter at the subsequent stage of the tuner that tunes the received signal may input the AD converted value of the received signal to the first demodulation set and the second demodulation set in parallel. This brings about an effect that demodulation processing with a plurality of broadcasting systems can be implemented in parallel in normal reception and channel scanning.

Furthermore, in the first aspect, the demodulation processing unit may perform demodulation of two systems using two tuners for the first broadcasting system and the second broadcasting system at the time of normal reception, and perform demodulation of one system using one tuner shared by the first broadcasting system and the second broadcasting system at the time of channel scanning. This brings about an effect that channel scanning for the first broadcasting system and the second broadcasting system is performed using one tuner while enabling simultaneous viewing with the first broadcasting system and the second broadcasting system at the time of normal reception.

Furthermore, in the first aspect, the demodulation processing unit may switch to demodulation by the second demodulation unit of the first demodulation set in a case where it is determined that demodulation cannot be performed by the first demodulation unit of the first demodulation set at the time of channel scanning, and switch to demodulation by the second demodulation unit of the second demodulation set in a case where it is determined that demodulation cannot be performed by the first demodulation unit of the second demodulation set at the time of channel scanning. This brings about an effect that the demodulation with the first broadcasting system or the second broadcasting system is performed for each channel while simultaneously confirming the broadcasting system with which demodulation can be performed for the first broadcasting system and the second broadcasting system.

Furthermore, in the first aspect, the demodulation processing unit may perform demodulation of two systems using two tuners shared by the first broadcasting system and the second broadcasting system at the time of channel scanning, and bands of channel frequencies to be respectively tuned by the two tuners may be set to be different from each other. This brings about an effect that demodulation for channel frequencies different from each other is simultaneously performed while enabling channel scanning for the first broadcasting system and the second broadcasting system.

Furthermore, in the first aspect, the reception device may further include a first shared circuit shared by the first demodulation unit and the second demodulation unit included in the first demodulation set, and a second shared circuit shared by the first demodulation unit and the second demodulation unit included in the second demodulation set. This brings about an effect that the demodulation processing is performed for each demodulation set while reducing a circuit scale of each demodulation set.

Furthermore, in the first aspect, the first demodulation set and the second demodulation set may perform demodulation with different broadcasting systems at the time of channel scanning. This brings about an effect that demodulation of channel scanning for the first broadcasting system and the second broadcasting system is performed in parallel while some circuits are shared in each of the first demodulation set and the second demodulation set.

Furthermore, in the first aspect, the reception device may further include a first selector that selects an output from the plurality of AD converters and inputs the selected output to the first demodulation set, and a second selector that selects an output from the plurality of AD converters and inputs the selected output to the second demodulation set. This brings about an effect that a correspondence relationship between inputs and outputs of the plurality of tuners and the plurality of demodulation sets can be changed.

Furthermore, in the first aspect, the reception device may further include a control processing unit that controls operation of the plurality of tuners, the first demodulation set, and the second demodulation set, and a third selector that selects any one of a demodulated signal of the first broadcasting system in the first demodulation set, a demodulated signal of the second broadcasting system in the first demodulation set, a demodulated signal of the first broadcasting system in the second demodulation set, and a demodulated signal of the second broadcasting system in the second demodulation set, and inputs the selected demodulated signal to the control processing unit. This brings about an effect that the demodulated signal of the same system is input to the same input terminal of the control processing unit while enabling demodulation with the broadcasting system with which demodulation can be performed between the first broadcasting system and the second broadcasting system.

Furthermore, in the first aspect, the reception device may further include a first automatic gain control (AGC) unit that adjusts a level of a signal to be output from a first tuner out of the plurality of tuners, a second AGC unit that adjusts a level of a signal to be output from a second tuner out of the plurality of tuners, a fourth selector that selects any one of an output of the first AGC unit and an output of the second AGC unit and inputs the selected output to the first tuner, and a fifth selector that selects any one of the output of the first AGC unit and the output of the second AGC unit and inputs the selected output to the second tuner. This brings about an effect that a correspondence relationship of inputs and outputs of the plurality of tuners and the plurality of AGC units can be changed according to a correspondence relationship of the inputs and the outputs of the plurality of tuners and the plurality of demodulation sets.

In addition, a second aspect is a reception method including confirming a broadcasting system with which demodulation can be performed among a plurality of broadcasting systems in parallel on the basis of a received signal from a tuner to be shared by the plurality of broadcasting systems at the time of channel scanning, and performing demodulation processing with the broadcasting system with which demodulation can be performed. This brings about an effect that the broadcasting system with which demodulation can be performed among the plurality of broadcasting systems is simultaneously confirmed while the tuner to be used for demodulation processing with the plurality of broadcasting systems in the channel scanning is shared.

### BRIEF DESCRIPTION OF DRAWINGS

Fig. 1 is a block diagram illustrating a configuration example of a reception device according to a first embodiment.
Fig. 2 is a flowchart indicating channel scanning operation of the reception device according to the first embodiment.
Fig. 3 is a block diagram illustrating a configuration example of a reception device according to a second embodiment.
Fig. 4 is a block diagram illustrating a configuration example of a reception device according to a third embodiment.
Fig. 5 is a block diagram illustrating a configuration example of a reception device according to a fourth embodiment.
Fig. 6 is a flowchart indicating channel scanning operation of the reception device according to the fourth embodiment.
Fig. 7 is a block diagram illustrating a configuration example of a reception device according to a fifth embodiment.
Fig. 8 is a flowchart indicating channel scanning operation of the reception device according to the fifth embodiment.
Fig. 9 is a block diagram illustrating a configuration example of a reception device according to a sixth embodiment.
Fig. 10 is a flowchart indicating channel scanning operation of the reception device according to the sixth embodiment.
Fig. 11 is a block diagram illustrating a configuration example of a reception device according to a seventh embodiment.

### MODE FOR CARRYING OUT THE INVENTION

Modes for carrying out the present technology (hereinafter, referred to as embodiments) will be described below. The description will be given in the following order.
1. First embodiment (example in which, in demodulation operation in a configuration in which two tuners are provided, demodulation processing of a received signal tuned by one selectable tuner shared by a first broadcasting system and a second broadcasting system at the time of channel scanning is performed for each broadcasting system)
2. Second embodiment (example in which, in demodulation operation in a configuration in which three tuners are provided, demodulation processing of a received signal tuned by two tuners which are shared by the first broadcasting system and the second broadcasting system at the time of channel scanning, and for which a scanning frequency band is divided, is performed for each broadcasting system)
3. Third embodiment (example in which, in demodulation operation in a configuration in which three tuners are provided, demodulation processing of a received signal tuned by one tuner shared by the first broadcasting system and the second broadcasting system at the time of channel scanning is performed for each broadcasting system, and demodulation processing of a received signal tuned by one tuner shared by a third broadcasting system and a fourth broadcasting system is performed for each broadcasting system)
4. Fourth embodiment (example in which demodulation processing of a received signal tuned by each of two tuners each shared by the first broadcasting system and the second broadcasting system at the time of channel scanning is performed in parallel)
5. Fifth embodiment (example in which, in demodulation operation in a configuration in which one tuner is provided, demodulation processing of a received signal tuned by a tuner shared by the first broadcasting system and the second broadcasting system at the time of channel scanning is performed for each broadcasting system)
6. Sixth embodiment (example in which, in demodulation operation in a configuration in which one tuner is provided, demodulation process of a received signal tuned by one tuner shared by the first broadcasting system and the second broadcasting system at the time of channel scanning is performed for each broadcasting system, and a circuit is shared by the first broadcasting system and the second broadcasting system)
7. Seventh embodiment (example in which a reception device is packaged)

### <1. First Embodiment>

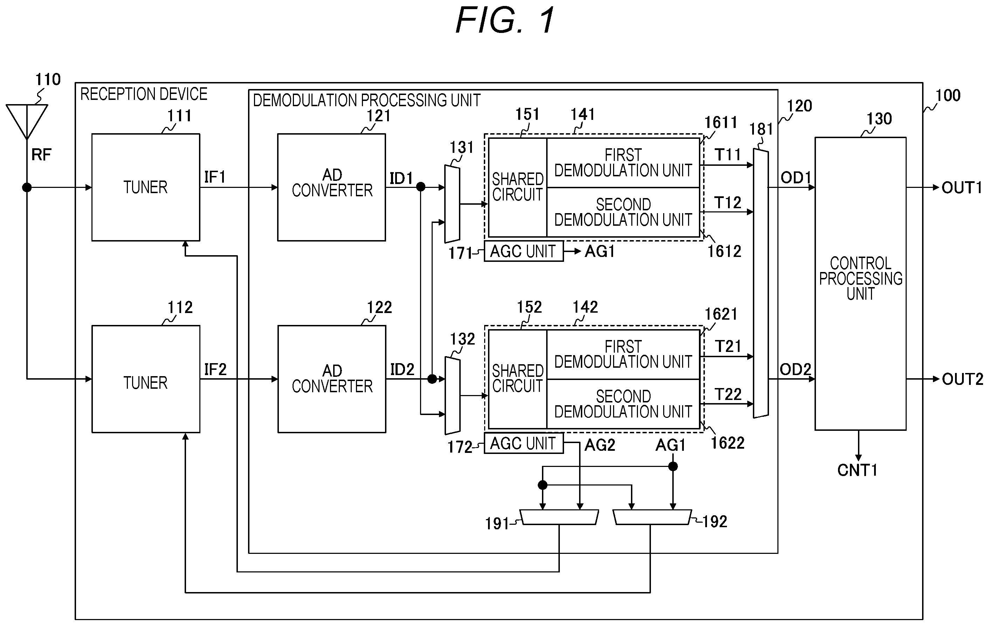

Fig. 1 is a block diagram illustrating a configuration example of a reception device according to a first embodiment.

In the drawing, a reception device 100 includes tuners 111, 112, a demodulation processing unit 120, and a control processing unit 130. The reception device 100 is connected to an antenna 110.

The antenna 110 receives a radio signal RF and inputs the radio signal RF to each of the tuners 111, 112. The radio signal RF may be, for example, a radio wave in a frequency band from 100 MHz to 1000 MHz. The radio signal RF can include signals of a plurality of broadcasting systems. Note that, in the present specification, a reception device that receives wireless broadcasting is taken as an example, but the reception device may receive wired broadcasting or may receive both wireless broadcasting and wired broadcasting. In a case where the reception device receives wired broadcasting, a wired signal can be received via a cable instead of the antenna 110.

Broadcasting systems that can be received by the reception device 100 are not limited to broadcasting systems of one country, and may be broadcasting systems of various countries existing in the whole world. In addition, the broadcasting system is not limited to a currently broadcasted broadcasting system, and a broadcasting system having a possibility of being broadcasted in the future may be used, or the same frequency range having a possibility of being broadcasted may be broadcasted with different broadcasting systems. The broadcasting system may include, for example, terrestrial digital broadcasting, satellite digital broadcasting, or cable digital broadcasting. In this event, the reception device 100 can properly use a transport stream (TS) signal, a type length value (TLV) signal, an advanced television systems committee (ATSC) link layer protocol (ALP) signal, and the like, according to the broadcasting system that can be received.

Each of the tuners 111, 112 tunes a received signal IF1 in accordance with a channel frequency included in the radio signal RF. Then, the tuner 111 outputs the tuned received signal IF1 to an AD converter 121, and the tuner 112 outputs the tuned received signal IF2 to an AD converter 122. In this event, each of the tuners 111, 112 may down-convert a frequency of the radio signal RF to an intermediate frequency such as 4 MHz, for example.

Here, the tuner 111 may be shared for demodulation processing of a plurality of broadcasting systems at the time of channel scanning, and the tuner 112 may be shared for demodulation processing of a plurality of broadcasting systems at the time of channel scanning. Here, in a case where the tuner 111 is shared for demodulation processing of a plurality of broadcasting systems at the time of channel scanning, operation of the tuner 112 may be stopped. Furthermore, in a case where the tuner 112 is shared for demodulation processing of a plurality of broadcasting systems at the time of channel scanning, operation of the tuner 111 may be stopped.

The demodulation processing unit 120 performs demodulation processing on the basis of the received signals IF1, IF2 tuned by the tuners 111, 112. In this event, the demodulation processing unit 120 can perform channel scanning for the plurality of broadcasting systems on the basis of tuning operation of the tuners of a number smaller than the number of systems to be used for the demodulation processing with the plurality of broadcasting systems at the time of normal reception. For example, the demodulation processing unit 120 can perform demodulation of two systems using the two tuners 111, 112 for the first broadcasting system and the second broadcasting system at the time of normal reception. Furthermore, the demodulation processing unit 120 can perform demodulation of one system using any one tuner of the two tuners 111, 112 at the time of channel scanning for the first broadcasting system and the second broadcasting system.

Here, in a case where the tuner 111 is selected for demodulation processing of the plurality of broadcasting systems in channel scanning, the demodulation processing unit 120 performs demodulation processing of the received signal IF1 tuned by the tuner 111 for each broadcasting system. In this event, on the basis of the received signal IF1 from the tuner 111 to be shared by the plurality of broadcasting systems at the time of channel scanning, the demodulation processing unit 120 can confirm a broadcasting system with which demodulation can be performed among the plurality of broadcasting systems in parallel and can perform the demodulation processing with the broadcasting system with which demodulation can be performed.

Furthermore, in a case where the tuner 112 is selected for the demodulation processing of the plurality of broadcasting systems in channel scanning, the demodulation processing unit 120 performs the demodulation processing of the received signal IF2 tuned by the tuner 112 for each broadcasting system. In this event, on the basis of the received signal IF2 from the tuner 112 to be shared by the plurality of broadcasting systems at the time of channel scanning, the demodulation processing unit 120 can confirm a broadcasting system with which demodulation can be performed among the plurality of broadcasting systems in parallel and can perform the demodulation processing with the broadcasting system with which demodulation can be performed.

The demodulation processing unit 120 includes analog to digital (AD) converters 121, 122, demodulation sets 141, 142, automatic gain control (AGC) units 171, 172, and selectors 131, 132, 181, 191, 192. The demodulation set 141 includes a first demodulation unit 1611 and a second demodulation unit 1612. The first demodulation unit 1611 and the second demodulation unit 1612 include a shared circuit 151. The demodulation set 142 includes a first demodulation unit 1621 and a second demodulation unit 1622. The first demodulation unit 1621 and the second demodulation unit 1622 include a shared circuit 152.

The AD converter 121 performs AD conversion on the received signal IF1 tuned by the tuner 111. The AD converter 121 is connected to a subsequent stage of the tuner 111. The AD converter 122 performs AD conversion on the received signal IF2 tuned by the tuner 112. The AD converter 122 is connected to a subsequent stage of the tuner 112.

Each of the demodulation sets 141, 142 demodulates signals of a plurality of broadcasting systems. In this event, the demodulation set 141 can include the first demodulation unit 1611 and the second demodulation unit 1612 as a set. The demodulation set 142 can include the first demodulation unit 1621 and the second demodulation unit 1622 as a set.

The first demodulation units 1611, 1621 demodulate the signals of the first broadcasting system included in the received signals IF1, IF2, and output demodulated signals T11, T21, respectively. The second demodulation units 1612, 1622 demodulate the signals of the second broadcasting system included in received signals IF1, IF2, and output demodulated signals T12, T22, respectively.

Here, in channel scanning, for example, assuming that the received signal IF1 is tuned by the tuner 111, the AD converter 121 inputs an AD converted value ID1 of the received signal IF1 to the first demodulation set 141 and the second demodulation set 142 in parallel. Then, the first demodulation set 141 and the second demodulation set 142 confirm a broadcasting system with which demodulation can be performed between the first broadcasting system and the second broadcasting system in parallel and perform demodulation processing with the broadcasting system with which demodulation can be performed. In this event, the first demodulation set 141 and the second demodulation set 142 can determine the broadcasting system with which demodulation can be performed between the first broadcasting system and the second broadcasting system on the basis of a result of confirmation as to whether a signal that supports the broadcasting system with which demodulation can be performed is included in the received signal IF1.

Here, the first demodulation set 141 and the second demodulation set 142 may confirm in parallel whether demodulation can be performed for different broadcasting systems on the basis of the received signal IF1 tuned by the tuner 111. For example, the first demodulation set 141 may determine whether demodulation can be performed for the first broadcasting system on the basis of the received signal IF1, and the second demodulation set 142 may determine whether demodulation can be performed for the second broadcasting system on the basis of the received signal IF1. For example, in a case where the broadcasting system with which demodulation can be performed for the channel received this time is the first broadcasting system, the first demodulation unit 1611 can demodulate the received signal IF1 that supports the first broadcasting system, and demodulation of the received signal IF1 that supports the second broadcasting system by the second demodulation unit 1622 can stand by. On the other hand, in a case where the broadcasting system with which demodulation can be performed for the channel received this time is the second broadcasting system, the second demodulation unit 1622 can demodulate the received signal IF1 that supports the second broadcasting system, and demodulation of the received signal IF1 that supports the first broadcasting system by the first demodulation unit 1611 can stand by.

Thus, the first demodulation unit 1611 can confirm whether demodulation can be performed with the first broadcasting system using the shared circuit 151, and the second demodulation unit 1622 can confirm whether demodulation can be performed with the second broadcasting system using the shared circuit 152. Thus, even in a case where the circuit is shared by the first demodulation unit 1611 and the second demodulation unit 1612 and the circuit is shared by the first demodulation unit 1621 and the second demodulation unit 1622, it is possible to confirm whether demodulation can be performed with a plurality of broadcasting systems in parallel while preventing control from being complicated.

A combination of the first broadcasting system and the second broadcasting system may be a combination of integrated services digital broadcasting (ISDB)-T and ISDB-T2 in terrestrial digital broadcasting. Alternatively, a combination of digital video broadcasting (DVB)-T and DVB-T2, a combination of advanced television systems committee (ATSC) 1.0 and ATSC 3.0, or a combination of ATSC 3.0 and ISDB-T2 may be used. In satellite digital broadcasting, a combination of ISDB-S and ISDB-S3 may be used, or a combination of DVB-S and DVB-S2 may be used. In cable digital broadcasting, a combination of integrated services digital broadcasting-cable (J. 183) and J. 382, or the like, may be used.

The shared circuit 151 is shared by the first demodulation unit 1611 and the second demodulation unit 1612. The shared circuit 152 is shared by the first demodulation unit 1621 and the second demodulation unit 1622. Each of the shared circuits 151, 152 may include a down-converter that down-converts the AD converted values ID1, ID2 of the received signals IF1, IF2 into baseband signals or may include a memory that stores data to be used for demodulation. Providing a memory in each of the shared circuits 151, 152 is particularly effective in reducing a circuit scale of the first demodulation set 141 and the second demodulation set 142.

Here, in a case where the shared circuit 151 to be shared by the first demodulation unit 1611 and the second demodulation unit 1612 is provided, the first demodulation unit 1611 and the second demodulation unit 1612 may confirm in parallel whether the broadcasting system is a broadcasting system with which demodulation can be performed. In this event, one of the first demodulation unit 1611 and the second demodulation unit 1612 can determine whether or not there is a signal that can be demodulated by causing some circuits to operate.

In addition, in a case where the shared circuit 152 to be shared by the first demodulation unit 1621 and the second demodulation unit 1622 is provided, the first demodulation unit 1611 and the second demodulation unit 1612 may confirm in parallel whether the broadcasting system is a broadcasting system with which demodulation can be performed. In this event, one of the first demodulation unit 1621 and the second demodulation unit 1622 can determine whether or not there is a signal that can be demodulated by causing some circuits to operate.

In this event, for example, whether or not there is a signal may be determined by causing the circuits to operate halfway through synchronization acquisition of a signal such as estimation of a transmission mode or a guard interval or acquisition of a transmission and multiplexing configuration control (TMCC) signal. Note that the transmission mode can indicate a transmission parameter of a modulated signal required at the time of demodulation. The guard interval may indicate a blank period for eliminating overlapping of preceding and following signals due to multipath. The TMCC signal is a transmission control signal that transmits a transmission parameter such as a modulation scheme necessary for demodulation such as 64 quadrature amplitude modulation (QAM). On the reception side, the transmission parameter can be extracted on the basis of demodulation of the TMCC signal.

The AGC unit 171 adjusts a level of a signal output from the tuner 111. In this event, the AGC unit 171 can output a gain control signal AG1 for adjusting the level of the signal of the tuner 111. The AGC unit 172 adjusts the level of the signal output from the tuner 111. In this event, the AGC unit 172 can output a gain control signal AG2 for adjusting the level of the signal of the tuner 112.

In demodulation processing in each of the demodulation sets 141, 142, it is assumed that an input signal to each of the AD converters 121, 122 is at a level that cannot be appropriately processed by each of the AD converters 121, 122. In this event, each of the AGC units 171, 172 adjusts the input signal to each of the AD converters 121, 122 to a level that can be appropriately processed by each of the AD converters 121, 122. The tuners 111, 112 can increase or decrease a gains (gain) thereof to make the input signals to the AD converters 121, 122 constant.

A selector 131 selects the AD converted values ID1, ID2 output from the AD converters 121, 122 and inputs the AD converted values ID1, ID2 to the demodulation set 141. A selector 132 selects the AD converted values ID1, ID2 output from the AD converters 121, 122 and inputs the AD converted values ID1, ID2 to the demodulation set 142.

In this event, at the time of normal reception, the selectors 131, 132 can exclusively select the AD converted values ID1, ID2. For example, if the selector 131 selects the AD converted value ID1, the selector 132 can select the AD converted value ID2, and if the selector 131 selects the AD converted value ID2, the selector 132 can select the AD converted value ID1. At the time of channel scanning, the selectors 131, 132 may commonly select the AD converted values ID1, ID2. For example, if the selector 131 selects the AD converted value ID1, the selector 132 may also select the AD converted value ID1, and if the selector 131 selects the AD converted value ID2, the selector 132 may also select the AD converted value ID2.

The selector 181 selects any one of the demodulated signals T11, T12, T21, T22 as each of the demodulated outputs OD1, OD2. Then, the selector 181 inputs the demodulated outputs OD1, OD2 to the control processing unit 130. In this event, the selector 181 can allocate the first broadcasting system to the demodulated output OD1 and allocate the second broadcasting system to the demodulated output OD2. For example, the selector 181 may select the demodulated output OD1 from the demodulated signals T11, T21 and select the demodulated output OD2 from the demodulated signals T12, T22. As a result, the control processing unit 130 can allocate the same input terminal of the control processing unit 130 to the same broadcasting system while enabling control processing of the first broadcasting system and the second broadcasting system. Thus, the same circuit can be always caused to operate for the same broadcasting system, and it is not necessary to switch the circuit according to switching between the first broadcasting system and the second broadcasting system, so that the control processing can be simplified.

The selector 191 selects any one of the gain control signals AG1, AG2 and inputs the selected signal to the tuner 111. In this event, in normal reception, in a case where the AD converted value ID1 from the AD converter 121 is selected by the selector 131 as the input of the demodulation set 141, the selector 191 selects the gain control signal AG1 from the AGC unit 171 and inputs the gain control signal AG1 to the tuner 111. Furthermore, in normal reception, in a case where the AD converted value ID1 from the AD converter 121 is selected by the selector 132 as the input of the demodulation set 142, the selector 191 selects the gain control signal AG2 from the AGC unit 172 and inputs the gain control signal AG2 to the tuner 111. On the other hand, in channel scanning, the selector 191 may fix the input to the tuner 111 to any one of the gain control signals AG1, AG2.

The selector 192 selects any one of the gain control signals AG1, AG2 and inputs the selected signal to the tuner 112. In this event, in normal reception, in a case where the AD converted value ID1 from the AD converter 121 is selected by the selector 131 as the input of the demodulation set 141, the selector 192 selects the gain control signal AG1 from the AGC unit 171 and inputs the gain control signal AG1 to the tuner 112. Furthermore, in normal reception, in a case where the AD converted value ID2 from the AD converter 122 is selected by the selector 132 as the input of the demodulation set 142, the selector 192 selects the gain control signal AG2 from the AGC unit 172 and inputs the gain control signal AG2 to the tuner 112. On the other hand, in channel scanning, the selector 192 may fix the input to the tuner 112 to any one of the gain control signals AG1, AG2.

The control processing unit 130 processes the demodulated signals T11, T12, T21, T22 output from the demodulation processing unit 120 and controls operation of the tuners 111, 112 and the demodulation processing unit 120. The processing of the demodulated signals T11, T12, T21, T22 output from the demodulation processing unit 120 may include demultiplexing processing, decoding processing, and the like. The control processing unit 130 can output a control signal CNT1 in order to control the tuners 111, 112 and the demodulation processing unit 120.

For example, the control processing unit 130 can select the tuners 111, 112, the AD converters 121, 122, and the demodulation sets 141, 142 to be caused to operate at the time of normal reception or channel scanning. Furthermore, the control processing unit 130 can select the first demodulation units 1611, 1621 and the second demodulation units 1612, 1622 to be caused to operate at the time of normal reception or channel scanning. The control processing unit 130 can select a channel frequency, and the like, of each of the tuners 111, 112 and set the sampling frequency of each of the AD converters 121, 122. Furthermore, the control processing unit 130 can control settings, and the like, of the demodulation sets 141, 142 necessary for demodulating the signals of the respective broadcasting systems. Furthermore, the control processing unit 130 can switch the selectors 131, 132, 181, 191, 192 at the time of normal reception or channel scanning.

For example, it is assumed that the reception device 100 performs normal reception of a plurality of broadcasting systems. In this event, the control processing unit 130 can instruct any one of the first demodulation units 1611, 1621 to start first demodulation processing based on the received signal IF1 tuned by the tuner 111. In addition, the control processing unit 130 can instruct any one of the second demodulation units 1612, 1622 to start second demodulation processing based on the received signal IF2 tuned by the tuner 112.

On the other hand, it is assumed that the reception device 100 performs channel scanning of a plurality of broadcasting systems. In this event, the control processing unit 130 can instruct any one of the first demodulation units 1611, 1621 to start first demodulation processing based on the received signal IF1 tuned by the tuner 111. In addition, the control processing unit 130 can instruct any one of the second demodulation units 1612, 1622 to start the second demodulation processing based on the received signal IF1 tuned by the tuner 111 simultaneously with the instruction to start the first demodulation processing.

Here, the control processing unit 130 can select a demodulation scheme in each of the demodulation sets 141, 142 such that demodulation of different broadcasting systems is performed in each of the demodulation sets 141, 142. For example, if demodulation with the first broadcasting system is selected in the demodulation set 141, the control processing unit 130 can select demodulation with the second broadcasting system in the demodulation set 142. Further, if demodulation with the second broadcasting system is selected in the demodulation set 141, the control processing unit 130 can select demodulation with the first broadcasting system in the demodulation set 142. In channel scanning of the plurality of broadcasting systems, the control processing unit 130 may stop operation of the tuner 111 if the tuner 112 is operating.

Hereinafter, a specific example of demodulation operation at the time of normal reception of the reception device 100 will be described.

The radio signal RF is input from the antenna 110 to each of the tuners 111, 112. Here, it is assumed that a viewer designates a channel of the first broadcasting system. In this event, the control processing unit 130 can instruct the tuner 111 to tune a channel frequency corresponding to the channel. However, the control processing unit 130 may instruct the tuner 112 to tune a channel frequency corresponding to the channel.

If the tuner 111 is instructed to tune the channel frequency corresponding to the channel of the first broadcasting system, the tuner 111 tunes the channel frequency and inputs the tuned received signal IF1 to the AD converter 121. Then, the AD converter 121 performs AD conversion on the received signal IF1 to generate the AD converted value ID1, and inputs the AD converted value ID1 to the selectors 131, 132.

In this event, the control processing unit 130 can instruct the selector 131 to select the AD converted value ID1 as the output of the selector 131. However, the control processing unit 130 may instruct the selector 132 to select the AD converted value ID1 as the output of the selector 132.

If the selector 131 is instructed to select the AD converted value ID1 as the output, the selector 131 inputs the AD converted value ID1 to the demodulation set 141. In this event, the control processing unit 130 causes the first demodulation unit 1611 to operate to enable demodulation with the first broadcasting system. The control processing unit 130 can stop operation of the second demodulation unit 1612 if the first demodulation unit 1611 is caused to operate. Then, the first demodulation unit 1611 demodulates the received signal IF1 on the basis of the AD converted value ID1 while using the shared circuit 151 in combination and inputs the demodulated signal T11 to the selector 181.

In this event, the control processing unit 130 can instruct the selector 181 to select the demodulated signal T11 as the demodulated output OD1. If the selector 181 is instructed to select the demodulated signal T11 as the demodulated output OD1, the selector 181 inputs the demodulated signal T11 to the control processing unit 130.

If the demodulated signal T11 is input as the demodulated output OD1, the control processing unit 130 performs demultiplexing processing, decoding processing, and the like, and outputs the signal as an output signal OUT1. The output signal OUT1 can be input to a display device. In this event, the display device can reproduce a video and audio of the first broadcasting system on the basis of the output signal OUT1 to provide them for viewing.

In a case where the tuner 111 is used at the time of normal reception, the control processing unit 130 can instruct the selector 191 to select the gain control signal AG1 as the output of the selector 191. In this event, the selector 191 selects the gain control signal AG1 and inputs the gain control signal AG1 to the tuner 111. By adjusting the gain on the basis of the gain control signal AG1, the tuner 111 can make the input signal of the AD converter 121 constant so as to be at a level that can be appropriately processed by the AD converter 121.

In addition, it is assumed that the viewer designates a channel of the first broadcasting system and then designates a channel of the second broadcasting system. In this event, assuming that the control processing unit 130 instructs the tuner 111 to tune a channel frequency corresponding to the channel of the first broadcasting system, the control processing unit instructs the tuner 112 to tune a channel frequency corresponding to the channel of the second broadcasting system.

If the tuner 112 is instructed to tune the channel frequency corresponding to the channel of the second broadcasting system, the tuner 112 tunes the channel frequency and inputs the tuned received signal IF2 to the AD converter 122. Then, the AD converter 122 performs AD conversion on the received signal IF2 to generate the AD converted value ID2 and inputs the AD converted value ID2 to the selectors 131, 132.

In this event, assuming that the control processing unit 130 instructs the selector 131 to select the AD converted value ID1 as the output of the selector 131, the control processing unit can instruct the selector 132 to select the AD converted value ID2 as the output of the selector 132.

If the selector 132 is instructed to select the AD converted value ID2 as the output, the selector 132 inputs the AD converted value ID2 to the demodulation set 142. In this event, the control processing unit 130 causes the second demodulation unit 1622 to operate to enable demodulation with the second broadcasting system. The control processing unit 130 can stop operation of the first demodulation unit 1621 if the second demodulation unit 1622 is caused to operate. Then, the second demodulation unit 1622 demodulates the received signal IF2 on the basis of the AD converted value ID2 while using the shared circuit 152 in combination and inputs the demodulated signal T22 to the selector 181.

In this event, the control processing unit 130 can instruct the selector 181 to select the demodulated signal T22 as the demodulated output OD2. If the selector 181 is instructed to select the demodulated signal T22 as the demodulated output OD2, the selector 181 inputs the demodulated signal T22 to the control processing unit 130.

If the demodulated signal T22 is input as the demodulated output OD2, the control processing unit 130 performs demultiplexing processing, decoding processing, and the like, and outputs the signal as an output signal OUT2. The output signal OUT2 can be input to the display device. In this event, the display device can reproduce a video and audio of the second broadcasting system on the basis of the output signal OUT2 while reproducing the video and audio of the first broadcasting system on the basis of the output signal OUT1 to provide them for viewing.

In a case where the tuner 112 is additionally used at the time of normal reception, the control processing unit 130 can instruct the selector 192 to select the gain control signal AG2 as the output of the selector 192. In this event, the selector 192 selects the gain control signal AG2 and inputs the gain control signal AG2 to the tuner 112. By adjusting the gain on the basis of the gain control signal AG2, the tuner 112 can make the input signal of the AD converter 122 constant so as to be at a level that can be appropriately processed by the AD converter 122.

This makes it possible for the reception device 100 to simultaneously receive broadcasting of a plurality of broadcasting systems. For example, in a case where the first broadcasting system is ISDB-T and the second broadcasting system is ISDB-T2, the reception device 100 can simultaneously receive ISDB-T and ISDB-T2.

In normal reception, a plurality of broadcasting systems may be simultaneously received, or a plurality of channels of the same broadcasting system may be simultaneously received. For example, it is assumed that the viewer designates the first channel of the first broadcasting system and then designates the second channel of the first broadcasting system.

In this event, assuming that the control processing unit 130 instructs the tuner 111 to tune the channel frequency corresponding to the first channel of the first broadcasting system, the control processing unit instructs the tuner 112 to tune the channel frequency corresponding to the second channel of the first broadcasting system.

If the tuner 112 is instructed to tune the channel frequency corresponding to the second channel of the first broadcasting system, the tuner 112 tunes the channel frequency and inputs the tuned received signal IF2 to the AD converter 122. Then, the AD converter 122 performs AD conversion on the received signal IF2 to generate the AD converted value ID2 and inputs the AD converted value ID2 to the selectors 131, 132.

If the control processing unit 130 instructs the selector 131 to select the AD converted value ID1 as the output of the selector 131, the control processing unit 130 can instruct the selector 132 to select the AD converted value ID2 as the output of the selector 132.

If the selector 132 is instructed to select the AD converted value ID2 as the output, the selector 132 inputs the AD converted value ID2 to the demodulation set 142. In this event, the control processing unit 130 causes the first demodulation unit 1621 to operate to enable demodulation with the first broadcasting system. The control processing unit 130 can stop operation of the second demodulation unit 1622 if the first demodulation unit 1621 is caused to operate. Then, the first demodulation unit 1621 demodulates the received signal IF2 on the basis of the AD converted value ID2 while using the shared circuit 152 in combination, and inputs the demodulated signal T21 to the selector 181.

In this event, the control processing unit 130 can instruct the selector 181 to select the demodulated signal T21 as the demodulated output OD2. If the selector 181 is instructed to select the demodulated signal T21 as the demodulated output OD2, the selector 181 inputs the demodulated signal T21 to the control processing unit 130.

If the demodulated signal T21 is input as the demodulated output OD2, the control processing unit 130 performs demultiplexing processing, decoding processing, and the like, and outputs the signal as the output signal OUT2. The output signal OUT2 can be input to the display device. In this event, the display device can reproduce the video and the audio of the second channel of the first broadcasting system on the basis of the output signal OUT2 while reproducing the video and the audio of the first channel of the first broadcasting system on the basis of the output signal OUT1 to provide them for viewing.

This makes it possible for the reception device 100 to simultaneously receive broadcasting of a plurality of channels of the same broadcasting system. For example, in a case where the first broadcasting system is ISDB-T, a plurality of channels of ISDB-T can be simultaneously received. Furthermore, in a case where the second broadcasting system is ISDB-T2, a plurality of channels of ISDB-T2 can be simultaneously received.

Next, a specific example of demodulation operation at the time of channel scanning of the reception device 100 will be described.

It is assumed that the viewer designates channel scanning. In this event, the control processing unit 130 can instruct the tuner 111 to tune a channel frequency to be subjected to channel scanning. In this event, the control processing unit 130 can stop tuning operation of the tuner 112. However, the control processing unit 130 may instruct the tuner 112 to tune a channel frequency to be subjected to channel scanning. In this event, the control processing unit 130 can stop tuning operation of the tuner 111.

Then, if the tuner 111 is instructed to tune a channel frequency to be subjected to channel scanning, the tuner 111 tunes the channel frequency and inputs the tuned received signal IF1 to the AD converter 121. Then, the AD converter 121 performs AD conversion on the received signal IF1 to generate the AD converted value ID1, and inputs the AD converted value ID1 to the selectors 131, 132. In a case where the AD converter 121 is caused to operate, the control processing unit 130 can stop operation of the AD converter 122.

In this event, the control processing unit 130 can instruct the selector 131 to select the AD converted value ID1 as the output of the selector 131 and instruct the selector 132 to select the AD converted value ID1 as the output of the selector 132.

If the selector 131 is instructed to select the AD converted value ID1 as the output, the selector 131 inputs the AD converted value ID1 to the demodulation set 141. Further, if the selector 132 is instructed to select the AD converted value ID1 as the output, the selector 132 inputs the AD converted value ID1 to the demodulation set 142.

Here, in the demodulation set 141, the control processing unit 130 can cause the first demodulation unit 1611 to operate to enable demodulation with the first broadcasting system. In this event, the control processing unit 130 can stop operation of the second demodulation unit 1612. Further, in the demodulation set 142, the control processing unit 130 can cause the second demodulation unit 1622 to operate to enable demodulation with the second broadcasting system. In this event, the control processing unit 130 can stop operation of the first demodulation unit 1621.

The control processing unit 130 can stop operation of the first demodulation unit 1611 and the second demodulation unit 1622 while causing the first demodulation unit 1621 and the second demodulation unit 1612 to operate for all channel frequencies to be subjected to channel scanning. As a result, switching of the operation of the first demodulation unit 1611 and the second demodulation unit 1612 and switching of the operation of the first demodulation unit 1621 and the second demodulation unit 1622 can be made unnecessary in association with update of the channel frequency to be subjected to channel scanning. It is therefore possible to simplify control of demodulation processing with a plurality of broadcasting systems in channel scanning.

Note that the control processing unit 130 may stop operation of the first demodulation unit 1621 and the second demodulation unit 1612 while causing the first demodulation unit 1611 and the second demodulation unit 1622 to operate for all channel frequencies to be subjected to channel scanning.

Then, in a case where the received signal IF1 can be demodulated with the first broadcasting system on the basis of the AD converted value ID1, the first demodulation unit 1611 demodulates the received signal IF1 on the basis of the AD converted value ID1 while using the shared circuit 151 in combination, and inputs the demodulated signal T11 to the selector 181. Further, in a case where the received signal IF1 can be demodulated with the second broadcasting system on the basis of the AD converted value ID1, the second demodulation unit 1622 demodulates the received signal IF1 on the basis of the AD converted value ID1 while using the shared circuit 152 in combination, and inputs the demodulated signal T22 to the selector 181.

In this event, in a case where the received signal IF1 cannot be demodulated with the first broadcasting system on the basis of the AD converted value ID1, the control processing unit 130 can cause the demodulation by the first demodulation unit 1611 to stand by until the demodulation by the second demodulation unit 1622 is completed. Further, in a case where the received signal IF1 cannot be demodulated by the second broadcasting system on the basis of the AD converted value ID1, the control processing unit 130 can cause the demodulation by the second demodulation unit 1611 to stand by until the demodulation by the first demodulation unit 1622 is completed.

Here, the control processing unit 130 can instruct the selector 181 to select the demodulated signal T11 as the demodulated output OD1. In addition, the control processing unit 130 can instruct the selector 181 to select the demodulated signal T22 as the demodulated output OD2. If the selector 181 is instructed to select the demodulated signal T11 as the demodulated output OD1, the selector 181 inputs the demodulated signal T11 to the control processing unit 130. Further, if the selector 181 is instructed to select the demodulated signal T22 as the demodulated output OD2, the selector 181 inputs the demodulated signal T22 to the control processing unit 130.

If the demodulated signal T11 is input as the demodulated output OD1, the control processing unit 130 registers tuning information of the first broadcasting system extracted on the basis of the demodulated signal T11 in a channel list. Further, if the demodulated signal T22 is input as the demodulated output OD2, the control processing unit 130 registers tuning information of the second broadcasting system extracted on the basis of the demodulated signal T22 in the channel list.

Here, regardless of which of the demodulation sets 141, 142 is used in channel scanning, the control processing unit 130 can instruct the selector 191 to select the gain control signal AG1 as the output of the selector 191. In this event, the selector 191 selects the gain control signal AG1 and inputs the gain control signal AG1 to the tuner 111. By adjusting the gain on the basis of the gain control signal AG1, the tuner 111 can make the input signal of the AD converter 121 constant so as to be at a level that can be appropriately processed by the AD converter 121.

As a result, the reception device 100 can reduce power consumption while simplifying demodulation processing in channel scanning, and can speed up demodulation processing in channel scanning.

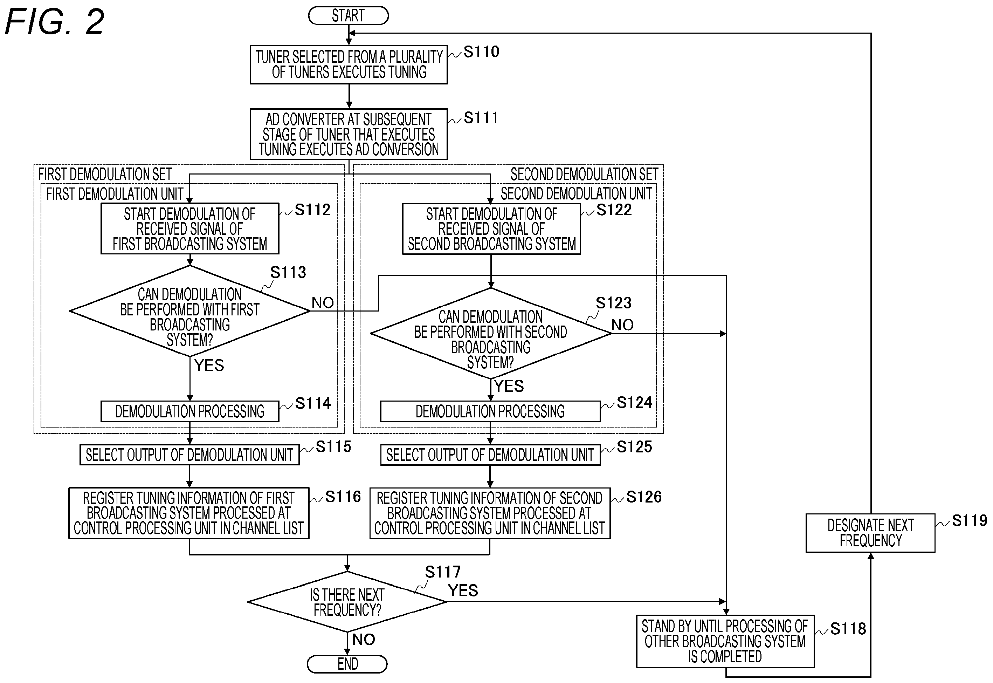

Fig. 2 is a flowchart indicating channel scanning operation of the reception device according to the first embodiment.

In the drawing, if channel scanning is started, the control processing unit 130 selects a tuner that performs tuning from the plurality of tuners 111, 112. For example, the control processing unit 130 can select the tuner 111 in order to perform tuning at the time of channel scanning. In this event, the control processing unit 130 can stop operation of the tuner 112 and the AD converter 122.

If it is assumed that the tuner 111 is selected as a tuner that performs tuning at the time of channel scanning, the tuner 111 performs tuning and inputs the received signal IF1 received on the basis of the tuning to the AD converter 121 (S110).

Next, the AD converter 121 performs AD conversion on the received signal IF1 tuned by the tuner 111 and inputs the AD converted value ID1 of the received signal IF1 to the selectors 131, 132 (S111). If the tuner 111 is selected as a tuner that performs tuning at the time of channel scanning, the control processing unit 130 instructs each of the selectors 131, 132 to select the AD converted value ID1 as an output of each of the selectors 131, 132. In this event, the AD converted value ID1 of the received signal IF1 is input in parallel to the demodulation sets 141, 142 via the selectors 131, 132.

Further, in the demodulation set 141 (first demodulation set) in channel scanning, the control processing unit 130 can cause the first demodulation unit 1611 to operate for demodulation of the received signal IF1, and can cause the second demodulation unit 1612 not to operate. In addition, the control processing unit 130 can instruct the selector 181 to select the demodulated signal T11 as the demodulated output OD1.

Further, in the demodulation set 142 (second demodulation set) in channel scanning, the control processing unit 130 can cause the second demodulation unit 1622 to operate for demodulation of the received signal IF1, and can cause the first demodulation unit 1621 not to operate. In addition, the control processing unit 130 can instruct the selector 181 to select the demodulated signal T22 as the demodulated output OD2.

In the demodulation set 141, the first demodulation unit 1611 starts demodulation of the received signal IF1 with the first broadcasting system on the basis of the AD converted value ID1 (S112). In this event, the first demodulation unit 1611 determines whether the received signal IF1 can be demodulated with the first broadcasting system on the basis of the AD converted value ID1 (S113). In a case where the received signal IF1 can be demodulated with the first broadcasting system on the basis of the AD converted value ID1, the first demodulation unit 1611 demodulates the received signal IF1 on the basis of the AD converted value ID1 (S114).

Next, the control processing unit 130 selects the demodulated output OD1 from the demodulated signals T11, T12 (S115). Note that the demodulated output OD1 may be selected on the basis of the control signal CNT1 from the control processing unit 130 or may be automatically selected. In this event, the control processing unit 130 selects the demodulated signal T11 as the demodulated output OD1 and inputs the demodulated signal T to the control processing unit 130 via the selector 181.

If the demodulated signal T11 is input, the control processing unit 130 registers tuning information of the first broadcasting system extracted on the basis of the demodulated signal T11 in the channel list (S116).

On the other hand, in the demodulation set 142, the second demodulation unit 1622 starts demodulation of the received signal IF1 with the second broadcasting system on the basis of the AD converted value ID1 (S122). In this event, the second demodulation unit 1622 determines whether the received signal IF1 can be demodulated with the second broadcasting system on the basis of the AD converted value ID1 (S123). In a case where the received signal IF1 can be demodulated with the second broadcasting system on the basis of the AD converted value ID1, the second demodulation unit 1622 demodulates the received signal IF1 on the basis of the AD converted value ID1 (S124).

Next, the control processing unit 130 selects the demodulated output OD2 from the demodulated signals T21, T22 (S125). Note that the demodulated output OD2 may be selected on the basis of the control signal CNT1 from the control processing unit 130 or may be automatically selected. In this event, the control processing unit 130 selects the demodulated signal T22 as the demodulated output OD2 and inputs the demodulated signal T to the control processing unit 130 via the selector 182.

If the demodulated signal T22 is input, the control processing unit 130 registers tuning information of the second broadcasting system extracted on the basis of the demodulated signal T22 in the channel list (S126).

Next, the control processing unit 130 determines whether there is a next channel frequency to be subjected to channel scanning (S117). In a case where there is a next channel frequency to be subjected to channel scanning, the control processing unit 130 stands by until processing with another broadcasting system is completed (S118), and then designates the next channel frequency (S119). On the other hand, in a case where there is no next channel frequency to be subjected to channel scanning, the control processing unit 130 ends channel scanning.

On the other hand, in a case where the received signal IF1 cannot be demodulated with the first broadcasting system on the basis of the AD converted value ID1, demodulation by the first demodulation unit 1611 stands by until demodulation by the second demodulation unit 1622 is completed (S118).

On the other hand, in a case where the received signal IF1 cannot be demodulated with the second broadcasting system on the basis of the AD converted value ID1, demodulation by the second demodulation unit 1622 stands by until demodulation by the first demodulation unit 1611 is completed (S118).

Note that, in the first embodiment described above, an example has been described in which the tuner 111 and the AD converter 121 are caused to operate at the time of channel scanning, and the operation of the tuner 112 and the AD converter 122 are stopped. In the channel scanning, the tuner 112 and the AD converter 122 may be caused to operate, and the operation of the tuner 111 and the AD converter 121 may be stopped.

Further, an example has been described in which in channel scanning, the first demodulation unit 1611 is caused to operate, and the operation of the second demodulation unit 1612 in the demodulation set 141 is stopped, and the second demodulation unit 1622 is caused to operate, and the operation of the first demodulation unit 1621 in the demodulation set 142 is stopped. In the channel scanning, in the demodulation set 141, the second demodulation unit 1612 may be caused to operate, and the operation of the first demodulation unit 1611 may be stopped, and in the demodulation set 142, the first demodulation unit 1621 may be caused to operate, and the operation of the second demodulation unit 1622 may be stopped.

As described above, in the first embodiment described above, the AD converted value ID1 of the received signal IF1 is input in parallel to the demodulation sets 141, 142, and whether demodulation can be performed is confirmed in parallel every time the channel frequency is designated in each of the demodulation sets 141, 142. Then, at each channel frequency, the first demodulation unit 1611 performs demodulation with the first broadcasting system if demodulation can be performed with the first broadcasting system, and the second demodulation unit 1622 performs demodulation with the second broadcasting system if demodulation can be performed with the second broadcasting system. This eliminates the need to perform switching control of the tuners 111, 112 or switching control of the demodulation scheme of each demodulation set 141 in accordance with whether the received signal IF1 is a signal of the first broadcasting system or a signal of the second broadcasting system. It is therefore possible to speed up demodulation processing in channel scanning of a plurality of broadcasting systems while simplifying control in channel scanning. Furthermore, in demodulation processing in channel scanning, the operation of the tuner 112 and the AD converter 122 can be stopped while the demodulation processing of a plurality of broadcasting systems in channel scanning is supported, so that power consumption can be reduced.

### <2. Second Embodiment>

In the first embodiment described above, in the demodulation operation in a configuration in which the two tuners 111, 112 are provided, the demodulation processing of the received signal tuned by one tuner to be shared by the first broadcasting system and the second broadcasting system at the time of channel scanning is performed for each broadcasting system. In the second embodiment, in the demodulation operation in a configuration in which the three tuners are provided, the demodulation processing of the received signal tuned by two tuners which are shared by the first broadcasting system and the second broadcasting system at the time of channel scanning, and for which a scanning frequency band is divided is performed for each broadcasting system.

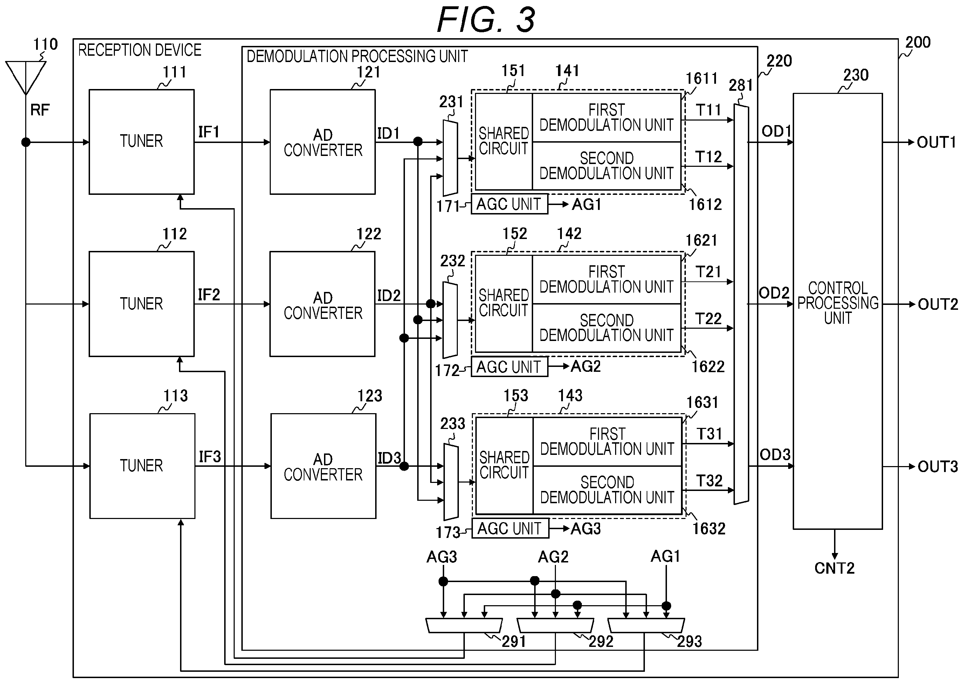

Fig. 3 is a block diagram illustrating a configuration example of a reception device according to the second embodiment.

In the drawing, a reception device 200 includes a demodulation processing unit 220 and a control processing unit 230 instead of the demodulation processing unit 120 and the control processing unit 130 of the first embodiment described above. Furthermore, in the reception device 200, a tuner 113 is added to the reception device 100 of the first embodiment described above. The other components of the reception device 200 of the second embodiment are similar to the components of the reception device 100 of the first embodiment described above.

The tuner 113 tunes a channel frequency included in the radio signal RF. Then, the tuner 113 outputs the tuned received signal IF3 to the AD converter 123. In this event, the tuner 113 may down-convert a frequency of the radio signal RF to an intermediate frequency such as 4 MHz, for example.

Here, any one of the tuners 111 to 113 may be shared for demodulation processing of a plurality of broadcasting systems at the time of channel scanning. For example, the tuner 111 may be shared for the demodulation processing of the first broadcasting system and the second broadcasting system at the time of channel scanning. In this event, the tuner 112 may be stopped, and the tuner 113 may be caused to operate. In a case where the tuners 111, 113 are caused to operate, a scanning frequency band may be divided and allocated to the tuners 111, 113.

The demodulation processing unit 220 performs demodulation processing with two types of broadcasting systems on the basis of the received signals IF1 to IF3 tuned by the tuners 111 to 113. The two types of broadcasting systems may be, for example, a combination of ISDB-T and ISDB-T2.

In this event, the demodulation processing unit 220 can share any one of the tuners 111 to 113 for the first broadcasting system and the second broadcasting system at the time of channel scanning. For example, it is assumed that the demodulation processing unit 220 shares the tuner 111 for the first broadcasting system and the second broadcasting system at the time of channel scanning. In this event, the demodulation processing unit 220 can confirm a broadcasting system with which demodulation can be performed between the first broadcasting system and the second broadcasting system in parallel on the basis of the received signal IF1 from the tuner 111 and can perform the demodulation processing with the broadcasting system with which demodulation can be performed. Here, if the tuner 111 is shared by the first broadcasting system and the second broadcasting system, the tuner 112 may be stopped and the tuner 113 may be caused to operate. In this event, the demodulation processing unit 220 may perform demodulation processing in parallel on the basis of the received signals IF1 and IF3 tuned while the scanning frequency band is divided between the tuners 111, 113. For example, the scanning frequency band of the tuner 111 may be set to a high frequency side, and the scanning frequency band of the tuner 113 may be set to a low frequency side.

Furthermore, in normal reception, the demodulation processing unit 220 can simultaneously perform demodulation processing of the received signals of the three systems on the basis of the received signals IF1 to IF3 tuned by the tuners 111 to 113. In the demodulation processing of the received signals for three systems in normal reception, three channels may be allocated to the same broadcasting system, two channels may be allocated to the first broadcasting system, and one channel may be allocated to the second broadcasting system, or one channel may be allocated to the first broadcasting system and two channels may be allocated to the second broadcasting system.

The demodulation processing unit 220 includes selectors 231 to 233, a selector 281, and selectors 291 to 293 instead of the selectors 131, 132, the selector 181, and the selectors 191, 192 of the first embodiment described above. Furthermore, in the demodulation processing unit 220, an AD converter 123, a demodulation set 143, and an AGC unit 173 are added to the demodulation processing unit 120 of the first embodiment described above. The other components of the demodulation processing unit 220 of the second embodiment are similar to the components of the demodulation processing unit 120 of the first embodiment described above.

The demodulation set 143 includes a first demodulation unit 1631 and a second demodulation unit 1632. The first demodulation unit 1631 and the second demodulation unit 1632 include a shared circuit 153.

The AD converter 123 performs AD conversion on the received signal IF3 tuned by the tuner 113. The AD converter 123 is connected to a subsequent stage of the tuner 113.

The demodulation set 143 demodulates signals of a plurality of broadcasting systems. In this event, the demodulation set 143 can include the first demodulation unit 1631 and the second demodulation unit 1632 as a set. The first demodulation unit 1631 demodulates a signal of the first broadcasting system included in the received signals IF1, IF2, IF3, and outputs a demodulated signal T31. The second demodulation unit 1632 demodulates a signal of the second broadcasting system included in received signals IF1, IF2, IF3, and outputs a demodulated signal T32.

The shared circuit 153 is shared by the first demodulation unit 1631 and the second demodulation unit 1632. For example, the shared circuit 153 may include a down-converter that down-converts the AD converted values ID1, ID2, ID3 of the received signals IF1, IF2, IF3 into baseband signals, or may include a memory that stores data to be used for demodulation.

The AGC unit 173 adjusts a level of a signal output from the tuner 113. In this event, the AGC unit 173 can output a gain control signal AG3 for adjusting the level of the signal of the tuner 113.

In the demodulation processing in the demodulation set 143, it is assumed that the input signal to the AD converter 123 is at a level that cannot be appropriately processed by the AD converter 123. In this event, the AGC unit 173 adjusts the input signal to the AD converter 123 to a level that can be appropriately processed by the AD converter 123. The tuner 113 can increase or decrease the gain to make the input signal to the AD converter 123 constant.

The selector 231 selects the AD converted values ID1, ID2, ID3 output from the AD converters 121, 122, 123 and inputs the selected values to the demodulation set 141. The selector 232 selects the AD converted values ID1, ID2, ID3 output from the AD converters 121, 122, 123 and inputs the selected values to the demodulation set 142. The selector 233 selects the AD converted values ID1, ID2, ID3 output from the AD converters 121, 122, 123 and inputs the selected values to the demodulation set 143.

In this event, at the time of normal reception, the selectors 231, 232, 233 can exclusively select the AD converted values ID1, ID2, ID3. For example, if the selector 231 selects the AD converted value ID1, the selector 232 may select the AD converted value ID2, and the selector 233 may select the AD converted value ID3. Alternatively, if the selector 231 selects the AD converted value ID1, the selector 232 may select the AD converted value ID3, and the selector 233 may select the AD converted value ID2. At the time of channel scanning, two of the selectors 231, 232, 233 may commonly select any one of the AD converted values ID1, ID2, AD3. In this event, the remaining one of the selectors 231, 232, 233 may select any one of the other AD converted values ID1, ID2, AD3. For example, if the selector 231 selects the AD converted value ID1, the selector 232 may also select the AD converted value ID1, and the selector 233 may select the AD converted value ID3.

The selector 281 selects any one of the demodulated signals T11, T12, T21, T22, T31, T32 as the demodulated outputs OD1 to OD3. Then, the selector 281 inputs the demodulated outputs OD1 to OD3 to the control processing unit 230. In this event, the selector 281 may allocate the first broadcasting system to the demodulated output OD1, allocate the second broadcasting system to the demodulated output OD2, and allocate the first broadcasting system or the second broadcasting system to the demodulated output OD3. For example, the selector 281 may select the demodulated output OD1 from the demodulated signals T11, T21, T31, select the demodulated output OD2 from the demodulated signals T12, T22, T32, and select the demodulated output OD3 from the demodulated signals T11, T21, T31 or the demodulated signals T12, T22, T32.

The selector 291 selects any one of the gain control signals AG1 to AG3 and inputs the selected signal to the tuner 111. In this event, in normal reception, in a case where the AD converted value ID1 from the AD converter 121 is selected by the selector 231 as the input of the demodulation set 141, the selector 291 selects the gain control signal AG1 from the AGC unit 171 and inputs the gain control signal AG1 to the tuner 111. Furthermore, in normal reception, in a case where the AD converted value ID1 from the AD converter 121 is selected by the selector 232 as the input of the demodulation set 142, the selector 291 selects the gain control signal AG2 from the AGC unit 172 and inputs the gain control signal AG2 to the tuner 111. Furthermore, in normal reception, in a case where the AD converted value ID1 from the AD converter 121 is selected by the selector 233 as the input of the demodulation set 143, the selector 291 selects the gain control signal AG3 from the AGC unit 173 and inputs the gain control signal AG3 to the tuner 111. On the other hand, in channel scanning, the selector 291 may fix the input to the tuner 111 to any one of the gain control signals AG1 to AG3.

The selector 292 selects any one of the gain control signals AG1 to AG3 and inputs the selected signal to the tuner 112. In this event, in normal reception, in a case where the AD converted value ID2 from the AD converter 122 is selected by the selector 231 as the input of the demodulation set 141, the selector 292 selects the gain control signal AG1 from the AGC unit 171 and inputs the gain control signal AG1 to the tuner 112. Furthermore, in normal reception, in a case where the AD converted value ID2 from the AD converter 122 is selected by the selector 232 as the input of the demodulation set 142, the selector 292 selects the gain control signal AG2 from the AGC unit 172 and inputs the gain control signal AG2 to the tuner 112. Furthermore, in normal reception, in a case where the AD converted value ID2 from the AD converter 122 is selected by the selector 233 as the input of the demodulation set 143, the selector 292 selects the gain control signal AG3 from the AGC unit 173 and inputs the gain control signal AG3 to the tuner 112. On the other hand, in channel scanning, the selector 292 may fix the input to the tuner 112 to any one of the gain control signals AG1 to AG3.

The selector 293 selects any one of the gain control signals AG1 to AG3 and inputs the selected signal to the tuner 113. In this event, in normal reception, in a case where the AD converted value ID3 from the AD converter 123 is selected by the selector 231 as the input of the demodulation set 141, the selector 293 selects the gain control signal AG1 from the AGC unit 171 and inputs the gain control signal AG1 to the tuner 113. Furthermore, in normal reception, in a case where the AD converted value ID3 from the AD converter 123 is selected by the selector 232 as the input of the demodulation set 142, the selector 293 selects the gain control signal AG2 from the AGC unit 172 and inputs the gain control signal AG2 to the tuner 113. Furthermore, in normal reception, in a case where the AD converted value ID3 from the AD converter 123 is selected by the selector 233 as the input of the demodulation set 143, the selector 293 selects the gain control signal AG3 from the AGC unit 173 and inputs the gain control signal AG3 to the tuner 113. On the other hand, in channel scanning, the selector 293 may fix the input to the tuner 113 to any one of the gain control signals AG1 to AG3.

The control processing unit 230 processes the demodulated signals T11, T12, T21, T22, T31, T32 output from the demodulation processing unit 220 and controls the operation of the tuners 111, 112, 113 and the demodulation processing unit 220. The control processing unit 230 can output a control signal CNT2 in order to control the tuners 111, 112, 113 and the demodulation processing unit 220.

For example, the control processing unit 230 can select the tuners 111, 112, 113, the AD converters 121, 122, 123, and the demodulation sets 141, 142, 143 that are to be caused to operate at the time of normal reception or channel scanning. Furthermore, the control processing unit 230 can select the first demodulation units 1611, 1621, 1631 and the second demodulation units 1612, 1622, 1632 that are to be caused to operate at the time of normal reception or channel scanning. The control processing unit 230 can select the channel frequency of each of the tuners 111, 112, 113 and set the sampling frequency, and the like, of each of the AD converters 121, 122, 123. Furthermore, the control processing unit 230 can control settings of the demodulation sets 141, 142, 143 necessary for demodulating the signals of the respective broadcasting systems. Furthermore, the control processing unit 230 can switch the selectors 231 to 233, 281, and 291 to 293 at the time of normal reception or channel scanning.

In addition, the control processing unit 230 performs demultiplexing processing, decoding processing, and the like, in accordance with the inputs of the demodulated signals T11, T12, T21, T22, T31, T32 and outputs the demodulated signals allocated to any of the output signals OUT1 to OUT3.

As described above, in the second embodiment described above, two systems out of three systems to be used for normal reception for the first broadcasting system and the second broadcasting system are used for channel scanning. In this event, any one of the three tuners 111 to 113 can be shared at the time of channel scanning, and any one can be stopped. This makes it possible to perform channel scanning for the first broadcasting system and the second broadcasting system while dividing the scanning frequency band, so that it is possible to speed up channel scanning.

### <3. Third Embodiment>

In the second embodiment described above, two systems out of three systems to be used for normal reception for two types of broadcasting systems are used for channel scanning. In a third embodiment, two systems among three systems to be used for normal reception for four types of broadcasting systems are used for channel scanning.

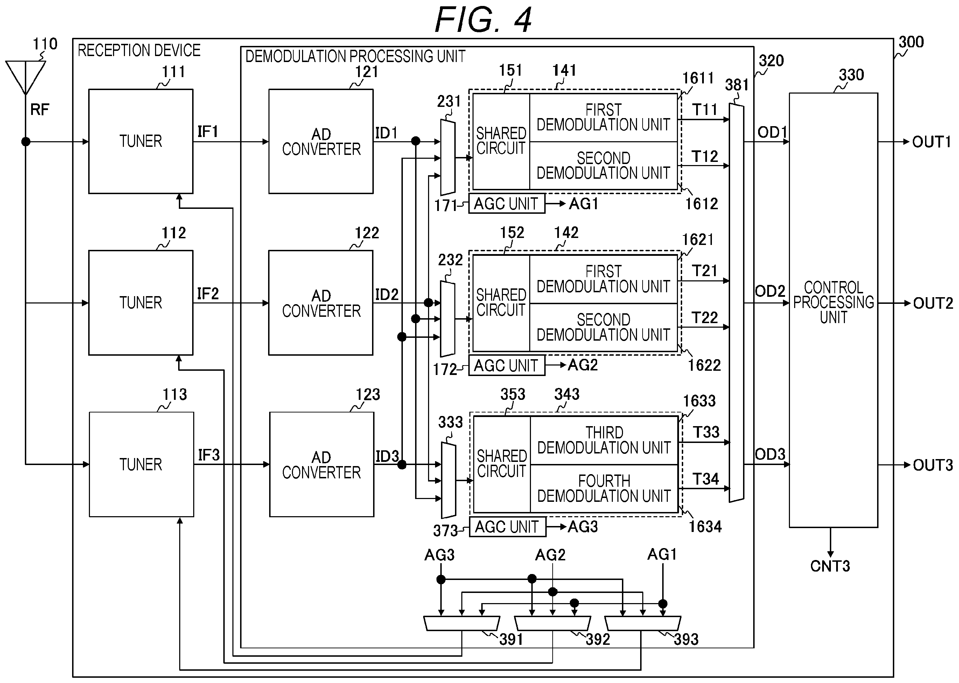

Fig. 4 is a block diagram illustrating a configuration example of a reception device according to the third embodiment.

In the drawing, a reception device 300 includes a demodulation processing unit 320 and a control processing unit 330 instead of the demodulation processing unit 220 and the control processing unit 230 of the second embodiment described above. The other components of the reception device 300 of the third embodiment are similar to the components of the reception device 200 of the second embodiment described above.

The demodulation processing unit 320 performs demodulation processing of four types of broadcasting systems on the basis of the received signals IF1 to IF3 tuned by the tuners 111 to 113. The four types of broadcasting systems may be, for example, a combination of ISDB-T, ISDB-T2, ISDB-S, and ISDB-S3.

In this event, the demodulation processing unit 320 can share any one of the tuners 111 to 113 between the first broadcasting system and the second broadcasting system at the time of channel scanning. For example, it is assumed that the demodulation processing unit 320 shares the tuner 111 between the first broadcasting system and the second broadcasting system at the time of channel scanning. In this event, the demodulation processing unit 320 can confirm a broadcasting system with which demodulation can be performed between the first broadcasting system and the second broadcasting system in parallel on the basis of the received signal IF1 from the tuner 111 and can perform the demodulation processing with the broadcasting system with which demodulation can be performed. Here, if the tuner 111 is shared between the first broadcasting system and the second broadcasting system, the tuner 112 may be stopped and the tuner 113 may be caused to operate. In this event, the demodulation processing unit 320 may perform the demodulation processing in parallel on the basis of the received signals IF1 and IF3 tuned by the tuners 111 and 113. For example, the demodulation processing unit 320 may perform the demodulation processing with the first broadcasting system or the second broadcasting system on the basis of the received signal IF1 tuned by the tuner 111, and perform the demodulation processing with the third broadcasting system or the fourth broadcasting system on the basis of the received signal IF3 tuned by the tuner 113.

Furthermore, in normal reception, the demodulation processing unit 320 can simultaneously perform the demodulation processing of the received signals of the three systems on the basis of the received signals IF1 to IF3 tuned by the tuners 111 to 113. In the demodulation processing of the received signals for three systems in normal reception, two channels may be allocated to the first broadcasting system and one channel may be allocated to the third broadcasting system, or two channels may be allocated to the first broadcasting system and one channel may be allocated to the fourth broadcasting system. Alternatively, one channel may be allocated to the first broadcasting system, one channel may be allocated to the second broadcasting system, and one channel may be allocated to the third broadcasting system, or one channel may be allocated to the first broadcasting system, one channel may be allocated to the second broadcasting system, and one channel may be allocated to the fourth broadcasting system.

The demodulation processing unit 320 includes a demodulation set 343, an AGC unit 373, and selectors 333, 381, and 391 to 393 instead of the demodulation set 143, the AGC unit 173, and the selectors 233, 281, and 291 to 293 of the second embodiment described above. The other components of the demodulation processing unit 320 of the third embodiment are similar to the components of the demodulation processing unit 220 of the second embodiment described above.

The demodulation set 343 demodulates signals of a plurality of broadcasting systems. In this event, the demodulation set 343 can include a third demodulation unit 1633 and a fourth demodulation unit 1634 as a set. The third demodulation unit 1633 demodulates a signal of the third broadcasting system included in the received signals IF1, IF2, IF3, and outputs the demodulated signal T33. The fourth demodulation unit 1634 demodulates a signal of the fourth broadcasting system included in the received signals IF1, IF2, IF3, and outputs the demodulated signal T34. Note that the combination of the first broadcasting system and the second broadcasting system may be a combination of ISDB-T and ISDB-T2, and the combination of the third broadcasting system and the fourth broadcasting system may be a combination of ISDB-S and ISDB-S3.

The third demodulation unit 1633 and the fourth demodulation unit 1634 include a shared circuit 353. The shared circuit 353 is shared by the third demodulation unit 1633 and the fourth demodulation unit 1634. For example, the shared circuit 353 may include a down-converter that down-converts the AD converted values ID1, ID2, ID3 of the received signals IF1, IF2, IF3 into baseband signals or may include a memory that stores data to be used for demodulation.

The AGC unit 373 adjusts a level of a signal output from the tuner 113. In this event, the AGC unit 373 can output a gain control signal AG3 for adjusting the level of the signal of the tuner 113.

In the demodulation processing in the demodulation set 343, it is assumed that the input signal to the AD converter 123 is at a level that cannot be appropriately processed by the AD converter 123. In this event, the AGC unit 373 adjusts the input signal to the AD converter 123 to a level that can be appropriately processed by the AD converter 123. The tuner 113 can increase or decrease the gain to make the input signal to the AD converter 123 constant.

The selector 333 selects the AD converted values ID1, ID2, ID3 output from the AD converters 121, 122, 123 and inputs the selected values to the demodulation set 343.

In this event, at the time of normal reception, the selector 333 can exclusively select the AD converted values ID1, ID2, ID3. For example, if the selector 231 selects the AD converted value ID1 and the selector 232 selects the AD converted value ID2, the selector 333 may select the AD converted value ID3. At the time of channel scanning, the selector 333 may select any of the AD converted values ID1, ID2, AD3 that are output without being selected by the selectors 231, 232. For example, if each of the selectors 231, 232 selects the AD converted value ID1 while the operation of the tuner 112 and the AD converter 122 is stopped, the selector 333 may select the AD converted value ID3.

The selector 381 selects any one of the demodulated signals T11, T12, T21, T22, T33, T34 as the demodulated outputs OD1 to OD3. Then, the selector 381 inputs the demodulated outputs OD1 to OD3 to the control processing unit 330. In this event, the selector 381 can allocate the first broadcasting system to the demodulated output OD1, allocate the second broadcasting system to the demodulated output OD2, and allocate the third broadcasting system or the fourth broadcasting system to the demodulated output OD3. For example, the selector 381 may select the demodulated output OD1 from the demodulated signals T11, T21, select the demodulated output OD2 from the demodulated signals T12, T22, and select the demodulated output OD3 from the demodulated signals T33, T34.

The selector 391 selects any one of the gain control signals AG1 to AG3 and inputs the selected signal to the tuner 111. In this event, in normal reception, in a case where the AD converted value ID1 from the AD converter 121 is selected by the selector 231 as the input of the demodulation set 141, the selector 391 selects the gain control signal AG1 from the AGC unit 171 and inputs the gain control signal AG1 to the tuner 111. Furthermore, in normal reception, in a case where the AD converted value ID1 from the AD converter 121 is selected by the selector 232 as the input of the demodulation set 142, the selector 391 selects the gain control signal AG2 from the AGC unit 172 and inputs the gain control signal AG2 to the tuner 111. Furthermore, in normal reception, in a case where the AD converted value ID1 from the AD converter 121 is selected by the selector 333 as the input of the demodulation set 343, the selector 391 selects the gain control signal AG3 from the AGC unit 373 and inputs the gain control signal AG3 to the tuner 111. On the other hand, in channel scanning, the selector 391 may fix the input to the tuner 111 to any one of the gain control signals AG1 to AG3.

The selector 392 selects any one of the gain control signals AG1 to AG3 and inputs the selected signal to the tuner 112. In this event, in normal reception, in a case where the AD converted value ID2 from the AD converter 122 is selected by the selector 231 as the input of the demodulation set 141, the selector 392 selects the gain control signal AG1 from the AGC unit 171 and inputs the gain control signal AG1 to the tuner 112. Furthermore, in normal reception, in a case where the AD converted value ID2 from the AD converter 122 is selected by the selector 232 as the input of the demodulation set 142, the selector 392 selects the gain control signal AG2 from the AGC unit 172 and inputs the gain control signal AG2 to the tuner 112. Furthermore, in normal reception, in a case where the AD converted value ID2 from the AD converter 122 is selected by the selector 333 as the input of the demodulation set 343, the selector 392 selects the gain control signal AG3 from the AGC unit 373 and inputs the gain control signal AG3 to the tuner 112. On the other hand, in channel scanning, the selector 392 may fix the input to the tuner 112 to any one of the gain control signals AG1 to AG3.

The selector 393 selects any one of the gain control signals AG1 to AG3 and inputs the selected signal to the tuner 113. In this event, in normal reception, in a case where the AD converted value ID3 from the AD converter 123 is selected by the selector 231 as the input of the demodulation set 141, the selector 393 selects the gain control signal AG1 from the AGC unit 171 and inputs the gain control signal AG1 to the tuner 113. Furthermore, in normal reception, in a case where the AD converted value ID3 from the AD converter 123 is selected by the selector 232 as the input of the demodulation set 142, the selector 393 selects the gain control signal AG2 from the AGC unit 172 and inputs the gain control signal AG2 to the tuner 113. Furthermore, in normal reception, in a case where the AD converted value ID3 from the AD converter 123 is selected by the selector 333 as the input of the demodulation set 343, the selector 393 selects the gain control signal AG3 from the AGC unit 373 and inputs the gain control signal AG3 to the tuner 113. On the other hand, in channel scanning, the selector 393 may fix the input to the tuner 113 to any one of the gain control signals AG1 to AG3.

The control processing unit 330 processes the demodulated signals T11, T12, T21, T22, T33, T34 output from the demodulation processing unit 320 and controls the operation of the tuners 111, 112, 113 and the demodulation processing unit 320. The control processing unit 330 can output a control signal CNT3 in order to control the tuners 111, 112, 113 and the demodulation processing unit 320.

For example, the control processing unit 330 can select the tuners 111, 112, 113, the AD converters 121, 122, and 123, and the demodulation sets 141, 142, 343 that are to be caused to operate at the time of normal reception or channel scanning. Furthermore, the control processing unit 330 can select the first demodulation units 1611, 1621, 1633 and the second demodulation units 1612, 1622, 1634 that are to be caused to operate at the time of normal reception or channel scanning. The control processing unit 330 can select the channel frequency of each of the tuners 111, 112, 113 and set the sampling frequency, and the like, of each of the AD converters 121, 122, 123. Furthermore, the control processing unit 330 can control settings of the demodulation sets 141, 142, 343 necessary for demodulating the signals of the respective broadcasting systems. Furthermore, the control processing unit 330 can switch the selectors 231, 232, 333, 381, and 391 to 393 at the time of normal reception or channel scanning.

In addition, the control processing unit 330 performs demultiplexing processing, decoding processing, and the like, in accordance with the inputs of the demodulated signals T11, T12, T21, T22, T33, T34, and outputs the demodulated signals allocated to any of the output signals OUT1 to OUT3.

As described above, in the third embodiment described above, two systems out of three systems to be used for normal reception for four types of broadcasting systems are used for channel scanning. Consequently, demodulation with the third broadcasting system or the fourth broadcasting system can be performed simultaneously with demodulation with the first broadcasting system and the second broadcasting system in channel scanning, so that it is possible to speed up channel scanning of the four types of broadcasting systems.

### <4. Fourth Embodiment>

In the first embodiment described above, in the demodulation operation in a configuration in which the two tuners 111, 112 are provided, the demodulation processing of the received signal tuned by selectable one tuner shared by the first broadcasting system and the second broadcasting system at the time of channel scanning is performed for each broadcasting system. In a fourth embodiment, at the time of channel scanning, demodulation processing of received signals respectively tuned by two tuners shared by the first broadcasting system and the second broadcasting system is performed in parallel.

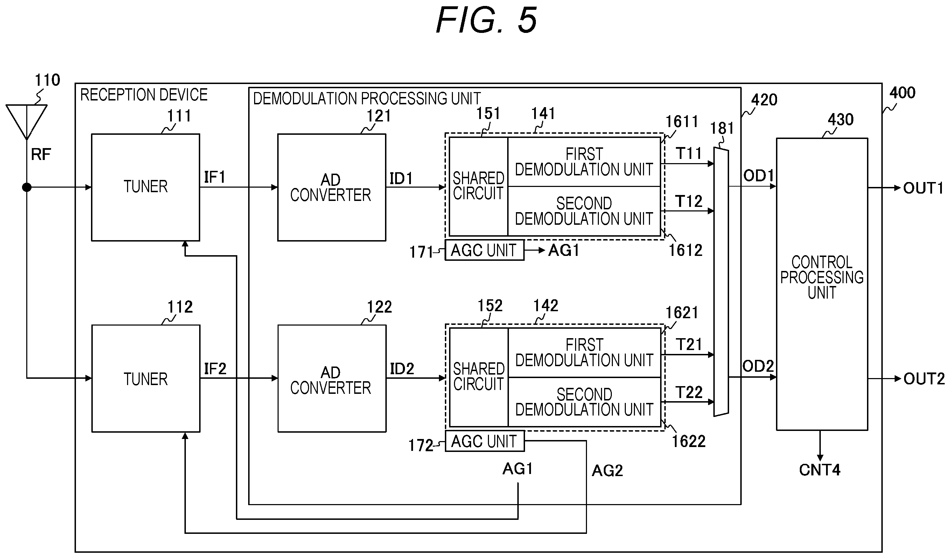

Fig. 5 is a block diagram illustrating a configuration example of a reception device according to the fourth embodiment.

In the drawing, a reception device 400 includes a demodulation processing unit 420 and a control processing unit 430 instead of the demodulation processing unit 120 and the control processing unit 130 of the first embodiment described above. The other components of the reception device 400 of the fourth embodiment are similar to the components of the reception device 100 of the first embodiment described above.

The demodulation processing unit 420 performs demodulation processing on the basis of the received signals IF1, IF2 tuned by the tuners 111, 112. In this event, the demodulation processing unit 420 can perform channel scanning for the plurality of broadcasting systems on the basis of tuning operation of the tuners of the same number as the number of systems to be used for demodulation processing of the plurality of broadcasting systems at the time of normal reception. For example, the demodulation processing unit 420 can perform demodulation with the first broadcasting system and the second broadcasting system on the basis of demodulation of two systems using the two tuners 111, 112 in normal reception and channel scanning. In this event, bands of channel frequencies to be tuned by the two tuners 111, 112 may be set to be different from each other. For example, in a broadcasting system such as DVB-S or DVB-S2 in which there are many channels having different symbol rates and different signal frequency bandwidths of a digital broadcasting signal itself even in the same broadcasting standard, channel scanning of bands of different channel frequencies may be performed while a plurality of signal frequency bandwidths is divided into respective systems.

Note that the reception device 100 according to the first embodiment described above may also perform demodulation with the first broadcasting system and the second broadcasting system on the basis of demodulation of two systems using the two tuners 111, 112. In this event, bands of channel frequencies to be tuned by the two tuners 111, 112 may be set to be different from each other. In a case where two systems of demodulation using two tuners 111, 112 are performed in the reception device 100 of the first embodiment described above, the AD converted value ID1 may be selected by the selector 131 and input to the demodulation set 141, and the AD converted value ID2 may be selected by the selector 132 and input to the demodulation set 142. In this event, the selector 191 can select the gain control signal AG1 and input the gain control signal AG1 to the tuner 111, and the selector 192 can select the gain control signal AG2 and input the gain control signal AG2 to the tuner 112.

Furthermore, the demodulation processing unit 420 can switch the broadcasting system with which demodulation is to be performed on the basis of a result of confirmation as to whether the broadcasting system is a broadcasting system with which demodulation can be performed. For example, in a case where the demodulation processing unit 420 determines that demodulation cannot be performed by the first demodulation unit 1611 of the demodulation set 141 at the time of channel scanning, the demodulation processing unit 420 may switch to demodulation by the second demodulation unit 1612 of the demodulation set 141. Furthermore, in a case where the demodulation processing unit 420 determines that demodulation cannot be performed by the first demodulation unit 1621 of the demodulation set 142 at the time of channel scanning, the demodulation processing unit 420 may switch to the demodulation by the second demodulation unit 1622 of the second demodulation set 142.

In the demodulation processing unit 420, the selectors 131, 132 and the selectors 191, 192 are removed from the demodulation processing unit 120 of the first embodiment described above. The other components of the demodulation processing device 420 of the fourth embodiment are similar to the components of the reception device 100 of the first embodiment described above.

Here, the AD converted value ID1 output from the AD converter 121 is directly input to the demodulation set 141. The AD converted value ID2 output from the AD converter 122 is directly input to the demodulation set 142.

In this event, in the demodulation set 141, the first demodulation unit 1611 can perform demodulation with the first broadcasting system on the basis of the AD converted value ID1 of the received signal IF1 in a case where the demodulation can be performed with the first broadcasting system. In addition, in the demodulation set 141, the second demodulation unit 1612 can perform demodulation with the second broadcasting system on the basis of the AD converted value ID1 of the received signal IF1 in a case where the demodulation can be performed with the second broadcasting system.

In addition, in the demodulation set 142, the first demodulation unit 1621 can perform demodulation with the first broadcasting system on the basis of the AD converted value ID2 of the received signal IF2 in a case where the demodulation can be performed with the first broadcasting system. In addition, in the demodulation set 142, the second demodulation unit 1622 can perform demodulation with the second broadcasting system on the basis of the AD converted value ID2 of the received signal IF2 in a case where the demodulation can be performed with the second broadcasting system.

The control processing unit 430 processes the demodulated signals T11, T12, T21, T22 output from the demodulation processing unit 420 and controls the operation of the tuners 111, 112 and the demodulation processing unit 420. The control processing unit 430 can output a control signal CNT4 in order to control the tuners 111, 112 and the demodulation processing unit 420.

For example, the control processing unit 430 can select the tuners 111, 112, the AD converters 121, 122, and the demodulation sets 141, 142 that are to be caused to operate at the time of normal reception or channel scanning. Furthermore, the control processing unit 430 can select the first demodulation units 1611, 1621 and the second demodulation units 1612, 1622 that are to be caused to operate at the time of normal reception or channel scanning. The control processing unit 430 can select a channel frequency of each of the tuners 111, 112 and set a sampling frequency, and the like, of each of the AD converters 121, 122. Furthermore, the control processing unit 430 can control settings, and the like, of the demodulation sets 141, 142 necessary for demodulating the signals of the respective broadcasting systems. Furthermore, the control processing unit 430 can switch each selector 181 at the time of normal reception or channel scanning.

For example, it is assumed that the reception device 400 performs normal reception with a plurality of broadcasting systems. In this event, in a case where the channel of the first broadcasting system is designated, the control processing unit 430 can instruct the first demodulation unit 1611 to start first demodulation processing based on the received signal IF1 tuned by the tuner 111. Furthermore, in a case where the channel of the second broadcasting system is designated, the control processing unit 430 can instruct the second demodulation unit 1622 to start second demodulation processing based on the received signal IF2 tuned by the tuner 112.

Alternatively, the control processing unit 430 may perform normal reception of a plurality of channels of the same broadcasting system. In this event, in a case where the first channel of the first broadcasting system is designated, the control processing unit 430 can instruct the first demodulation unit 1611 to start the first demodulation processing based on the received signal IF1 tuned by the tuner 111. Furthermore, in a case where the second channel of the first broadcasting system is designated, the control processing unit 430 can instruct the first demodulation unit 1621 to start the first demodulation processing based on the received signal IF2 tuned by the tuner 112.

On the other hand, it is assumed that the reception device 400 performs channel scanning of a plurality of broadcasting systems. In this event, the control processing unit 430 can instruct the demodulation set 141 to start demodulation processing based on the received signal IF1 tuned by the tuner 111. Furthermore, the control processing unit 430 can instruct the demodulation set 142 to start demodulation processing based on the received signal IF2 tuned by the tuner 112.

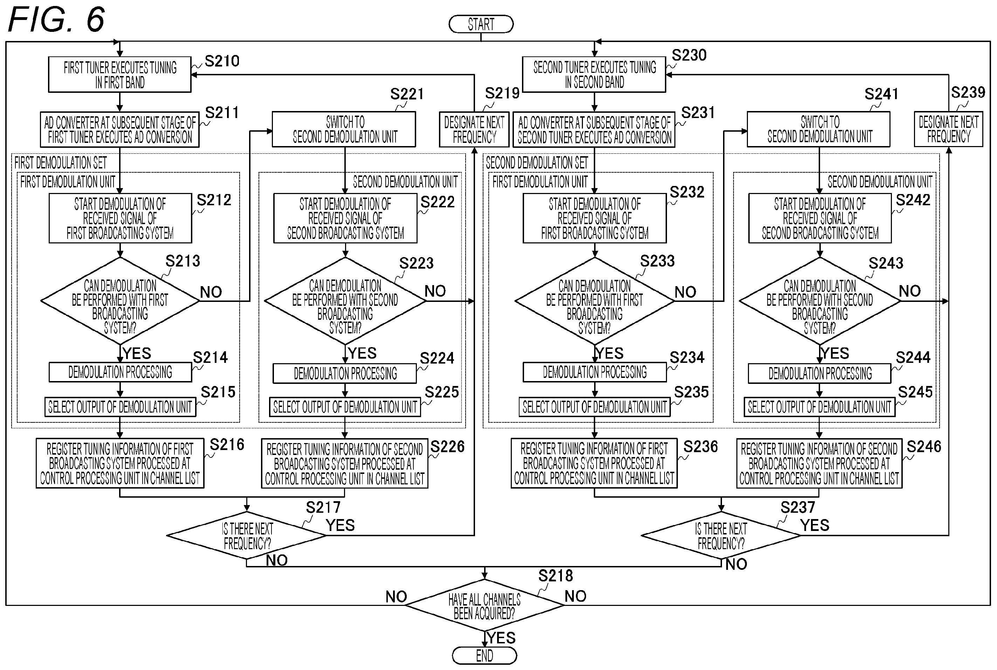

Fig. 6 is a flowchart indicating channel scanning operation of the reception device according to the fourth embodiment.

In the drawing, if the control processing unit 430 starts channel scanning, the tuner 111 (first tuner) performs tuning in a first band of the channel frequency (S210). In this event, the tuner 112 (second tuner) performs tuning in a second band of the channel frequency in parallel with tuning in the first band of the channel frequency by the tuner 111 (S230). The first band may be set on the high frequency side of the channel frequency, and the second band may be set on the low frequency side of the channel frequency.

If tuning is performed in the first band of the channel frequency, the tuner 111 inputs the received signal IF1 received on the basis of the tuning to the AD converter 121.

Next, the AD converter 121 performs AD conversion on the received signal IF1 tuned by the tuner 111 and inputs the AD converted value ID1 of the received signal IF1 to the demodulation set 141 (first demodulation set) (S211).

Next, in the demodulation set 141, the first demodulation unit 1611 starts demodulation of the received signal IF1 with the first broadcasting system on the basis of the AD converted value ID1 (S212). In this event, the first demodulation unit 1611 determines whether the received signal IF1 can be demodulated with the first broadcasting system on the basis of the AD converted value ID1 (S213). In a case where the received signal IF1 can be demodulated with the first broadcasting system on the basis of the AD converted value ID1, the first demodulation unit 1611 demodulates the received signal IF1 on the basis of the AD converted value ID1 (S214).

Next, the control processing unit 430 selects the demodulated output OD1 from the demodulated signals T11, T12 (S215). In this event, the control processing unit 430 selects the demodulated signal T11 as the demodulated output OD1 and inputs the demodulated signal T to the control processing unit 430 via the selector 181.

If the demodulated signal T11 is input, the control processing unit 430 registers tuning information of the first broadcasting system extracted on the basis of the demodulated signal T11 in the channel list (S216).

On the other hand, in a case where the received signal IF1 cannot be demodulated with the first broadcasting system on the basis of the AD converted value ID1, the demodulation is switched from the first demodulation unit 1611 to the second demodulation unit 1612 (S221).

Next, in the demodulation set 141, the second demodulation unit 1612 starts demodulation of the received signal IF1 with the second broadcasting system on the basis of the AD converted value ID1 (S222). In this event, the second demodulation unit 1612 determines whether the received signal IF1 can be demodulated with the second broadcasting system on the basis of the AD converted value ID1 (S223). In a case where the received signal IF1 can be demodulated with the second broadcasting system on the basis of the AD converted value ID1, the second demodulation unit 1612 demodulates the received signal IF1 on the basis of the AD converted value ID1 (S224).

Next, the control processing unit 430 selects the demodulated output OD2 from the demodulated signals T21, T22 (S225). In this event, the control processing unit 430 selects the demodulated signal T12 as the demodulated output OD2 and inputs the demodulated signal T to the control processing unit 430 via the selector 181.

If the demodulated signal T12 is input, the control processing unit 430 registers tuning information of the second broadcasting system extracted on the basis of the demodulated signal T12 in the channel list (S226).

Next, the control processing unit 430 determines whether there is a next channel frequency to be subjected to channel scanning (S217). In a case where there is a next channel frequency to be subjected to channel scanning, the control processing unit 430 designates the next channel frequency (S219), and returns the processing to S210. On the other hand, in a case where there is no next channel frequency to be subjected to channel scanning, the control processing unit 430 determines whether all channels have been acquired (S218). In a case where all the channels have been acquired, the control processing unit 430 ends channel scanning. On the other hand, in a case where all the channels have not been acquired, the control processing unit 430 returns the processing to S210.

On the other hand, if tuning is performed in the second band of the channel frequency, the tuner 112 inputs the received signal IF2 received on the basis of the tuning to the AD converter 122.

Next, the AD converter 122 performs AD conversion on the received signal IF2 tuned by the tuner 112 and inputs the AD converted value ID2 of the received signal IF2 to the demodulation set 142 (second demodulation set) (S231).

Next, in the demodulation set 142, the first demodulation unit 1621 starts demodulation of the received signal IF2 with the first broadcasting system on the basis of the AD converted value ID2 (S232). In this event, the first demodulation unit 1621 determines whether the received signal IF2 can be demodulated with the first broadcasting system on the basis of the AD converted value ID2 (S233). In a case where the received signal IF2 can be demodulated with the first broadcasting system on the basis of the AD converted value ID2, the first demodulation unit 1621 demodulates the received signal IF2 on the basis of the AD converted value ID2 (S234).

Next, the control processing unit 430 selects the demodulated output OD1 from the demodulated signals T21, T22 (S235). In this event, the control processing unit 430 selects the demodulated signal T21 as the demodulated output OD1 and inputs the demodulated signal T to the control processing unit 430 via the selector 181.

If the demodulated signal T21 is input, the control processing unit 430 registers tuning information of the first broadcasting system extracted on the basis of the demodulated signal T21 in the channel list (S236).

On the other hand, in a case where the received signal IF2 cannot be demodulated with the first broadcasting system on the basis of the AD converted value ID2, the demodulation is switched from the first demodulation unit 1621 to the second demodulation unit 1622 (S241).

Next, in the demodulation set 142, the second demodulation unit 1622 starts demodulation of the received signal IF2 with the second broadcasting system on the basis of the AD converted value ID2 (S242). In this event, the second demodulation unit 1622 determines whether the received signal IF2 can be demodulated with the second broadcasting system on the basis of the AD converted value ID2 (S243). In a case where the received signal IF2 can be demodulated with the second broadcasting system on the basis of the AD converted value ID2, the second demodulation unit 1622 demodulates the received signal IF2 on the basis of the AD converted value ID2 (S244).

Next, the control processing unit 430 selects the demodulated output OD2 from the demodulated signals T21, T22 (S245). In this event, the control processing unit 430 selects the demodulated signal T22 as the demodulated output OD2 and inputs the demodulated signal T to the control processing unit 430 via the selector 181.

If the demodulated signal 212 is input, the control processing unit 430 registers tuning information of the second broadcasting system extracted on the basis of the demodulated signal T22 in the channel list (S246).

Next, the control processing unit 430 determines whether there is a next channel frequency to be subjected to channel scanning (S237). In a case where there is a next channel frequency to be subjected to channel scanning, the control processing unit 430 designates the next channel frequency (S239), and returns the processing to S230. On the other hand, in a case where there is no next channel frequency to be subjected to channel scanning, the control processing unit 430 determines whether all channels have been acquired (S218). In a case where all the channels have been acquired, the control processing unit 430 ends channel scanning. On the other hand, in a case where all the channels have not been acquired, the control processing unit 430 returns the processing to S230.

As described above, in the above-described fourth embodiment, demodulation processing of the received signals IF1, IF2 respectively tuned by the two tuners 111, 112 shared by the first broadcasting system and the second broadcasting system at the time of channel scanning is performed in parallel. This makes it possible to perform channel scanning for the first broadcasting system and the second broadcasting system while dividing the scanning frequency band, so that it is possible to speed up channel scanning.

### <5. Fifth Embodiment>

In the first embodiment described above, in the demodulation operation in a configuration in which the two tuners 111, 112 are provided, demodulation processing of the received signal tuned by one tuner 111 shared by the first broadcasting system and the second broadcasting system at the time of channel scanning is performed for each broadcasting system. In a fifth embodiment, in the demodulation operation in a configuration in which one tuner 111 is provided, demodulation processing of the received signal tuned by the tuner 111 shared by the first broadcasting system and the second broadcasting system at the time of channel scanning is performed for each broadcasting system.

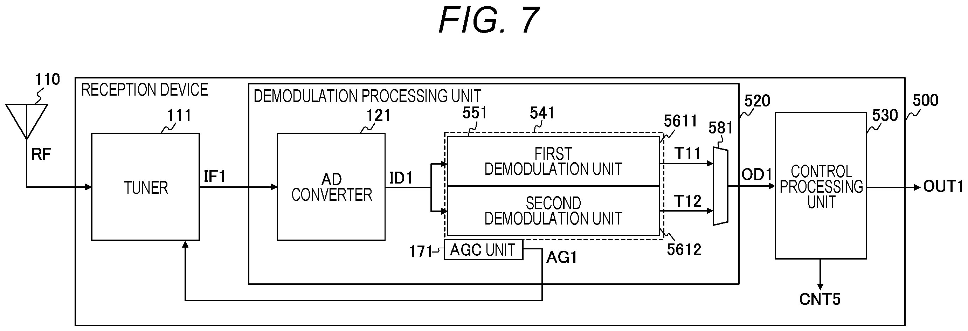

Fig. 7 is a block diagram illustrating a configuration example of a reception device according to the fifth embodiment.

In the drawing, the reception device 500 includes a demodulation processing unit 520 and a control processing unit 530 instead of the demodulation processing unit 420 and the control processing unit 430 of the fourth embodiment described above. Furthermore, in the reception device 500, the tuner 112 is removed from the reception device 400 of the fourth embodiment described above. The other components of the reception device 500 of the fifth embodiment are similar to the components of the reception device 400 of the fourth embodiment described above.

On the basis of the received signal IF1 from the tuner 111 shared by the plurality of broadcasting systems at the time of channel scanning, the demodulation processing unit 520 can confirm a broadcasting system with which demodulation can be performed among the plurality of broadcasting systems in parallel and can perform demodulation processing with the broadcasting system with which demodulation can be performed. Here, demodulation by the demodulation processing unit 520 can stand by until the channel frequency of the input of the received signal IF1 is updated to the broadcasting system with which demodulation can be performed for a broadcasting system with which demodulation cannot be performed on the basis of the input of the received signal IF1. The demodulation processing unit 520 may switch the broadcasting system with which demodulation is to be performed on the basis of a result of confirmation as to whether the broadcasting system is a broadcasting system with which demodulation can be performed.

The demodulation processing unit 520 includes a demodulation set 541 and a selector 581 instead of the demodulation set 141 and the selector 181 of the fourth embodiment described above. In addition, in the demodulation processing unit 520, the AD converter 122, the demodulation set 142, and the AGC unit 172 are removed from the demodulation processing unit 420 of the fourth embodiment described above. The other components of the demodulation processing unit 520 of the fifth embodiment are similar to the components of the demodulation processing unit 420 of the fourth embodiment described above.

The demodulation set 541 demodulates signals of a plurality of broadcasting systems. In this event, the demodulation set 541 can include a first demodulation unit 5611 and a second demodulation unit 5612 as a set. The first demodulation unit 5611 demodulates a signal of the first broadcasting system included in the received signal IF1. The second demodulation unit 5612 demodulates a signal of the second broadcasting system included in the received signal IF1.

The AD converted value ID1 of the received signal IF1 is directly input from the AD converter 121 to the demodulation set 541. In this event, the AD converted value ID1 of the received signal IF1 is input in parallel to the first demodulation unit 5611 and the second demodulation unit 5612.

Here, in a case where demodulation can be performed with the first broadcasting system, the first demodulation unit 5611 can perform demodulation with the first broadcasting system on the basis of the AD converted value ID1 of the received signal IF1. On the other hand, in a case where the demodulation cannot be performed with the first broadcasting system, demodulation by the first demodulation unit 5611 can stand by until the demodulation can be performed with the first broadcasting system on the basis of the AD converted value ID1 of the received signal IF1. While the demodulation by the first demodulation unit 5611 with the first broadcasting system stands by, the second demodulation unit 5612 can perform demodulation with the second broadcasting system.

On the basis of the AD converted value ID1 of the received signal IF1, the second demodulation unit 5612 can perform demodulation with the second broadcasting system in a case where the demodulation can be performed with the second broadcasting system. On the other hand, in a case where the demodulation cannot be performed with the second broadcasting system on the basis of the AD converted value ID1 of the received signal IF1, the demodulation by the second demodulation unit 5612 can stand by until the demodulation can be performed with the second broadcasting system. While the demodulation by the second demodulation unit 5612 with the second broadcasting system stands by, the first demodulation unit 5611 can perform demodulation with the first broadcasting system.

The control processing unit 530 processes the demodulated signals T11, T12 output from the demodulation processing unit 520 and controls the operation of the tuner 111 and the demodulation processing unit 520. The control processing unit 530 can output a control signal CNT5 to control the tuner 111 and the demodulation processing unit 520.

For example, the control processing unit 530 can select a channel frequency of the tuner 111 and set a sampling frequency, and the like, of the AD converter 121. Furthermore, the control processing unit 530 can control setting of the demodulation set 541 necessary for demodulating the signals of the respective broadcasting systems. Furthermore, the control processing unit 530 can switch the selector 581 at the time of normal reception or channel scanning.

For example, it is assumed that the reception device 500 performs normal reception. In this event, in a case where the channel of the first broadcasting system is designated, the control processing unit 530 can instruct the first demodulation unit 5611 to start the first demodulation processing based on the received signal IF1 tuned by the tuner 111. Furthermore, in a case where the channel of the second broadcasting system is designated, the control processing unit 530 can instruct the second demodulation unit 5612 to start the second demodulation processing based on the received signal IF1 tuned by the tuner 111.

On the other hand, it is assumed that the reception device 500 performs channel scanning of a plurality of broadcasting systems. In this event, the control processing unit 530 can instruct the demodulation set 541 to start demodulation processing based on the received signal IF1 tuned by the tuner 111.

Hereinafter, a specific example of the demodulation operation at the time of normal reception of the reception device 500 will be described.

The radio signal RF is input from the antenna 110 to the tuner 111. Here, it is assumed that a viewer designates a channel of the first broadcasting system. In this event, the control processing unit 530 can instruct the tuner 111 to tune a channel frequency corresponding to the channel.

If the tuner 111 is instructed to tune the channel frequency corresponding the channel of the first broadcasting system, the tuner 111 tunes the channel frequency and inputs the tuned received signal IF1 to the AD converter 121. Then, the AD converter 121 performs AD conversion on the received signal IF1 to generate the AD converted value ID1 and inputs the AD converted value ID1 to the first demodulation unit 5611 and the second demodulation unit 5612 in parallel.

Here, the control processing unit 530 can instruct the first demodulation unit 5611 to perform demodulation with the first broadcasting system. In this event, the first demodulation unit 1611 demodulates the received signal IF1 on the basis of the AD converted value ID1 and inputs the demodulated signal T11 to the selector 581.

Here, the control processing unit 530 can instruct the selector 581 to select the demodulated signal T11 as the demodulated output OD1. If the selector 581 is instructed to select the demodulated signal T11 as the demodulated output OD1, the selector 581 inputs the demodulated signal T11 to the control processing unit 530. If the demodulated signal T11 is input as the demodulated output OD1, the control processing unit 530 performs demultiplexing processing, decoding processing, and the like, and outputs the signal as the output signal OUT1. The output signal OUT1 can be input to a display device. In this event, the display device can reproduce a video and audio of the first broadcasting system on the basis of the output signal OUT1 to provide them for viewing.

On the other hand, it is assumed that the viewer designates the channel of the second broadcasting system. In this event, the control processing unit 530 can instruct the tuner 111 to tune a channel frequency corresponding to the channel.

If the tuner 111 is instructed to tune the channel frequency corresponding to the channel of the second broadcasting system, the tuner 111 tunes the channel frequency and inputs the tuned received signal IF1 to the AD converter 121. Then, the AD converter 121 performs AD conversion on the received signal IF1 to generate the AD converted value ID1 and inputs the AD converted value ID1 to the first demodulation unit 5611 and the second demodulation unit 5612 in parallel.

Here, the control processing unit 530 can instruct the second demodulation unit 5612 to perform demodulation with the second broadcasting system. In this event, the second demodulation unit 5612 demodulates the received signal IF1 on the basis of the AD converted value ID1 and inputs the demodulated signal T12 to the selector 581.

Here, the control processing unit 530 can instruct the selector 581 to select the demodulated signal T12 as the demodulated output OD1. If the selector 581 is instructed to select the demodulated signal T12 as the demodulated output OD1, the selector 581 inputs the demodulated signal T12 to the control processing unit 530. If the demodulated signal T12 is input as the demodulated output OD1, the control processing unit 530 performs demultiplexing processing, decoding processing, and the like, and outputs the signal as the output signal OUT1. The output signal OUT1 can be input to a display device. In this event, the display device can reproduce a video and audio of the second broadcasting system on the basis of the output signal OUT1 to provide them for viewing.

Next, a specific example of the demodulation operation at the time of channel scanning of the reception device 500 will be described.

It is assumed that the viewer designates channel scanning. In this event, the control processing unit 530 can instruct the tuner 111 to tune a channel frequency to be subjected to channel scanning.

Then, if the tuner 111 is instructed to tune a channel frequency to be subjected to channel scanning, the tuner 111 tunes the channel frequency and inputs the tuned received signal IF1 to the AD converter 121. Then, the AD converter 121 performs AD conversion on the received signal IF1 to generate the AD converted value ID1 and inputs the AD converted value ID1 to the first demodulation unit 5611 and the second demodulation unit 5612 in parallel.

If the AD converted value ID1 of the received signal IF1 is input in parallel to the first demodulation unit 5611 and the second demodulation unit 5612, the first demodulation unit 5611 and the second demodulation unit 5612 can confirm in parallel a broadcasting system with which demodulation can be performed between the first broadcasting system and the second broadcasting system. Here, in a case where demodulation can be performed with the first broadcasting system, the first demodulation unit 5611 can perform demodulation with the first broadcasting system on the basis of the AD converted value ID1 of the received signal IF1. On the other hand, in a case where the demodulation cannot be performed with the first broadcasting system on the basis of the AD converted value ID1 of the received signal IF1, the first demodulation unit 5611 can stand by until the demodulation with the second broadcasting system by the second demodulation unit 5612 is completed.

On the basis of the AD converted value ID1 of the received signal IF1, the second demodulation unit 5612 can perform demodulation with the second broadcasting system in a case where the demodulation can be performed with the second broadcasting system. On the other hand, in a case where the demodulation cannot be performed with the second broadcasting system on the basis of the AD converted value ID1 of the received signal IF1, the second demodulation unit 5612 can stand by until the demodulation by the first demodulation unit 5611 with the first broadcasting system is completed.

After the received signal IF1 is demodulated on the basis of the AD converted value ID1, the first demodulation unit 5611 inputs the demodulated signal T11 to the selector 581. In this event, the control processing unit 530 can instruct the selector 581 to select the demodulated signal T11 as the demodulated output OD1. If the selector 581 is instructed to select the demodulated signal T11 as the demodulated output OD1, the selector 581 inputs the demodulated signal T11 to the control processing unit 530. If the demodulated signal T11 is input as the demodulated output OD1, the control processing unit 530 registers tuning information of the first broadcasting system extracted on the basis of the demodulated signal T11 in the channel list.

After the received signal IF1 is demodulated on the basis of the AD converted value ID1, the second demodulation unit 5612 inputs the demodulated signal T12 to the selector 581. In this event, the control processing unit 530 can instruct the selector 581 to select the demodulated signal T12 as the demodulated output OD1. If the selector 581 is instructed to select the demodulated signal T12 as the demodulated output OD1, the selector 581 inputs the demodulated signal T12 to the control processing unit 530. If the demodulated signal T12 is input as the demodulated output OD1, the control processing unit 530 registers tuning information of the second broadcasting system extracted on the basis of the demodulated signal T12 in the channel list.

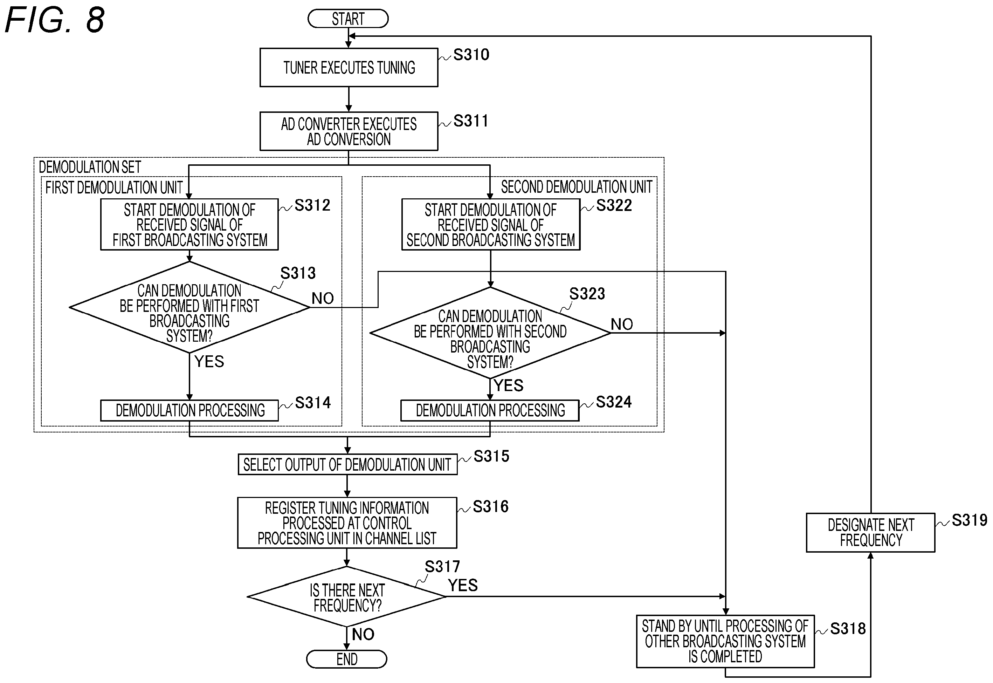

Fig. 8 is a flowchart indicating channel scanning operation of the reception device according to the fifth embodiment.

In the drawing, if channel scanning is started, the control processing unit 530 instructs the tuner 111 to perform tuning. If the tuner 111 is instructed to perform tuning, the tuner 111 performs tuning and inputs the received signal IF1 received on the basis of the tuning to the AD converter 121 (S310). In this event, the tuner 111 can adjust the gain on the basis of the gain control signal AG1 and make the input signal of the AD converter 121 constant so as to be at a level that can be appropriately processed by the AD converter 121.

Next, the AD converter 121 performs AD conversion on the received signal IF1 tuned by the tuner 111 and inputs the AD converted value ID1 of the received signal IF1 to the demodulation set 541 (S311). In this event, the AD converted value ID1 of the received signal IF1 is input in parallel to the first demodulation unit 5611 and the second demodulation unit 5612.

The first demodulation unit 5611 starts demodulation of received signal IF1 with the first broadcasting system on the basis of the AD converted value ID1 (S312). In this event, the first demodulation unit 5611 determines whether the received signal IF1 can be demodulated with the first broadcasting system on the basis of the AD converted value ID1 (S313). In a case where the received signal IF1 can be demodulated with the first broadcasting system on the basis of the AD converted value ID1, the first demodulation unit 5611 demodulates the received signal IF1 on the basis of the AD converted value ID1 (S314).

Next, the control processing unit 530 selects the demodulated output OD1 from the demodulated signals T11, T12 (S315). Note that the demodulated output OD1 may be selected on the basis of the control signal CNT5 from the control processing unit 530 or may be automatically selected. In this event, the control processing unit 530 selects the demodulated signal T11 as the demodulated output OD1 and inputs the demodulated signal T to the control processing unit 530 via the selector 581.

If the demodulated signal T11 is input, the control processing unit 530 registers tuning information of the first broadcasting system extracted on the basis of the demodulated signal T11 in the channel list (S316).

Next, the control processing unit 530 determines whether there is a next channel frequency to be subjected to channel scanning (S317). In a case where there is a next channel frequency to be subjected to channel scanning, the control processing unit 530 stands by until processing with another broadcasting system is completed (S318), and then designates the next channel frequency (S319). On the other hand, in a case where there is no next channel frequency to be subjected to channel scanning, the control processing unit 530 ends channel scanning.

On the other hand, the second demodulation unit 5612 starts demodulation of the received signal IF1 with the second broadcasting system on the basis of the AD converted value ID1 (S322). In this event, the second demodulation unit 5612 determines whether the received signal IF1 can be demodulated with the second broadcasting system on the basis of the AD converted value ID1 (S323). In a case where the received signal IF1 can be demodulated with the second broadcasting system on the basis of the AD converted value ID1, the second demodulation unit 5612 demodulates the received signal IF1 on the basis of the AD converted value ID1 (S324).

Next, the control processing unit 530 selects the demodulated output OD1 from the demodulated signals T11, T12 (S315). Note that the demodulated output OD1 may be selected on the basis of the control signal CNT5 from the control processing unit 530 or may be automatically selected. In this event, the control processing unit 530 selects the demodulated signal T12 as the demodulated output OD1 and inputs the demodulated signal T to the control processing unit 530 via the selector 581.

If the demodulated signal T12 is input, the control processing unit 530 registers tuning information of the second broadcasting system extracted on the basis of the demodulated signal T12 in the channel list (S316), and the processing proceeds to S317.

On the other hand, in a case where the received signal IF1 cannot be demodulated with the first broadcasting system on the basis of the AD converted value ID1, the demodulation by the first demodulation unit 5611 with the first demodulation unit 5611 stands by until the demodulation by the second demodulation unit 5612 is completed (S318).

On the other hand, in a case where the received signal IF1 cannot be demodulated with the second broadcasting system on the basis of the AD converted value ID1, the demodulation by the second demodulation unit 5612 with the second demodulation unit 5612 stands by until the demodulation by the first demodulation unit 5611 is completed (S318).

As described above, in the fifth embodiment described above, the AD converted value ID1 of the received signal IF1 received by the tuner 111 shared by the first broadcasting system and the second broadcasting system at the time of channel scanning is input in parallel to the first demodulation unit 5611 and the second demodulation unit 5612. In this event, the first demodulation unit 5611 and the second demodulation unit 5612 can confirm in parallel whether demodulation can be performed on the basis of the AD converted value ID1 of the received signal IF1. Then, demodulation can be performed with one of the first demodulation unit 5611 and the second demodulation unit 5612 with which demodulation can be performed, and one of the first demodulation unit 5611 and the second demodulation unit 5612 that cannot perform demodulation can stand by until demodulation can be performed. This eliminates the need of switching control of an output destination of the AD converted value ID1 from the AD converter 121 according to whether the received signal IF1 is a signal of the first broadcasting system or a signal of the second broadcasting system, so that it is possible to speed up demodulation processing in channel scanning of a plurality of broadcasting systems. Furthermore, the number of tuners 111 is one, so that it is possible to simplify control as compared with a case where a plurality of tuners 111, 112 is provided, and achieve low power consumption while reducing a mounting area.

### <6. Sixth Embodiment>

In the fifth embodiment described above, in the demodulation operation in a configuration in which one tuner 111 is provided, the demodulation processing of the received signal tuned by the tuner 111 shared by the first broadcasting system and the second broadcasting system at the time of channel scanning is performed for each broadcasting system. In a sixth embodiment, in the demodulation operation in a configuration in which one tuner 111 is provided, some circuits to be used for demodulation with the first broadcasting system and the second broadcasting system are shared.

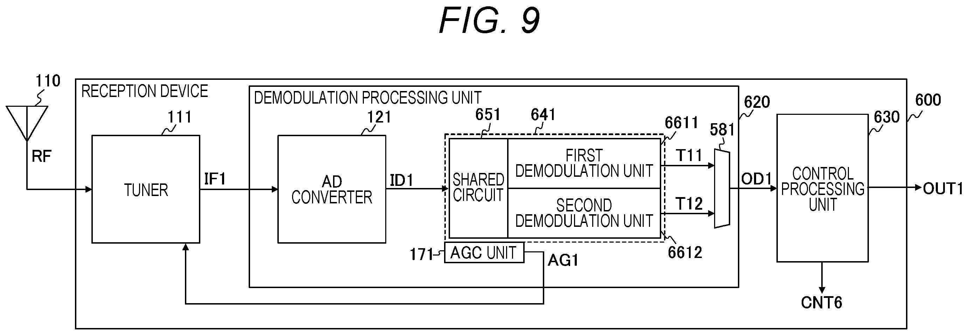

Fig. 9 is a block diagram illustrating a configuration example of a reception device according to the sixth embodiment.

In the drawing, the reception device 600 includes a demodulation processing unit 620 and a control processing unit 630 instead of the demodulation processing unit 520 and the control processing unit 530 of the fifth embodiment described above. The other components of the reception device 600 of the sixth embodiment are similar to the components of the reception device 500 of the fifth embodiment described above.

On the basis of the received signal IF1 from the tuner 111 shared by the plurality of broadcasting systems at the time of channel scanning, the demodulation processing unit 620 can confirm broadcasting systems with which demodulation can be performed among the plurality of broadcasting systems in parallel, and can perform demodulation processing with the broadcasting systems with which demodulation can be performed. Here, the demodulation processing unit 620 can confirm a broadcasting system with which demodulation can be performed by causing some circuits to operate for some broadcasting systems among the plurality of broadcasting systems. In this event, the demodulation processing unit 620 may confirm a broadcasting system with which demodulation can be performed by causing some circuits to operate halfway through signal synchronization acquisition. In addition, the demodulation processing unit 620 can confirm whether demodulation can be performed with the broadcasting system using a shared circuit 651 and confirms whether synchronization acquisition can be performed using some circuits in parallel.

The demodulation processing unit 620 includes a demodulation set 641 instead of the demodulation set 541 of the fifth embodiment described above. The other components of the demodulation processing unit 620 of the sixth embodiment are similar to the components of the demodulation processing unit 520 of the fifth embodiment described above.

The demodulation set 641 demodulates signals of a plurality of broadcasting systems. In this event, the demodulation set 641 can include a first demodulation unit 6611 and a second demodulation unit 6612 as a set. The first demodulation unit 6611 demodulates a signal of the first broadcasting system included in the received signal IF1. The second demodulation unit 6612 demodulates a signal of the second broadcasting system included in the received signal IF1.

The first demodulation unit 6611 and the second demodulation unit 6612 include a shared circuit 651. The shared circuit 651 is shared by the first demodulation unit 6611 and the second demodulation unit 6612. The shared circuit 651 may include, for example, a down-converter that down-converts the AD converted value ID1 of the received signal IF1 into a baseband signal or may include a memory that stores data to be used for demodulation. The AD converted value ID1 of the received signal IF1 is directly input from the AD converter 121 to the demodulation set 641.

In a case where synchronization acquisition or demodulation can be performed with the first broadcasting system on the basis of the AD converted value ID1 of the received signal IF1, the first demodulation unit 6611 can perform synchronization acquisition or demodulation with the first broadcasting system. In a case where synchronization acquisition or demodulation can be performed with the second broadcasting system on the basis of the AD converted value ID1 of the received signal IF1, the second demodulation unit 6612 can perform synchronization acquisition or demodulation with the second broadcasting system.

Here, the first demodulation unit 6611 and the second demodulation unit 6612 can confirm whether synchronization acquisition can be performed with the first broadcasting system or the second broadcasting system and confirm whether demodulation can be performed in parallel. For example, the first demodulation unit 6611 may confirm whether demodulation can be performed using the shared circuit 651, and the second demodulation unit 6612 may confirm whether synchronization acquisition can be performed with the second broadcasting system by causing some circuits to operate. Alternatively, the first demodulation unit 6611 may confirm whether synchronization acquisition can be performed with the first broadcasting system by causing some circuits to operate, and the second demodulation unit 6612 may confirm whether demodulation can be performed by using the shared circuit 651.

The control processing unit 630 processes the demodulated signals T11, T12 output from the demodulation processing unit 620 and controls the operation of the tuner 111 and the demodulation processing unit 620. The control processing unit 630 can output a control signal CNT6 in order to control the tuner 111 and the demodulation processing unit 620.

For example, the control processing unit 630 can perform setting of tuning of a channel frequency by the tuner 111 and a sampling frequency, and the like, of the AD converter 121. Furthermore, the control processing unit 630 can control setting of the demodulation set 641 necessary for demodulating the signals of the respective broadcasting systems. Furthermore, the control processing unit 630 can switch the selector 581 at the time of normal reception or channel scanning.

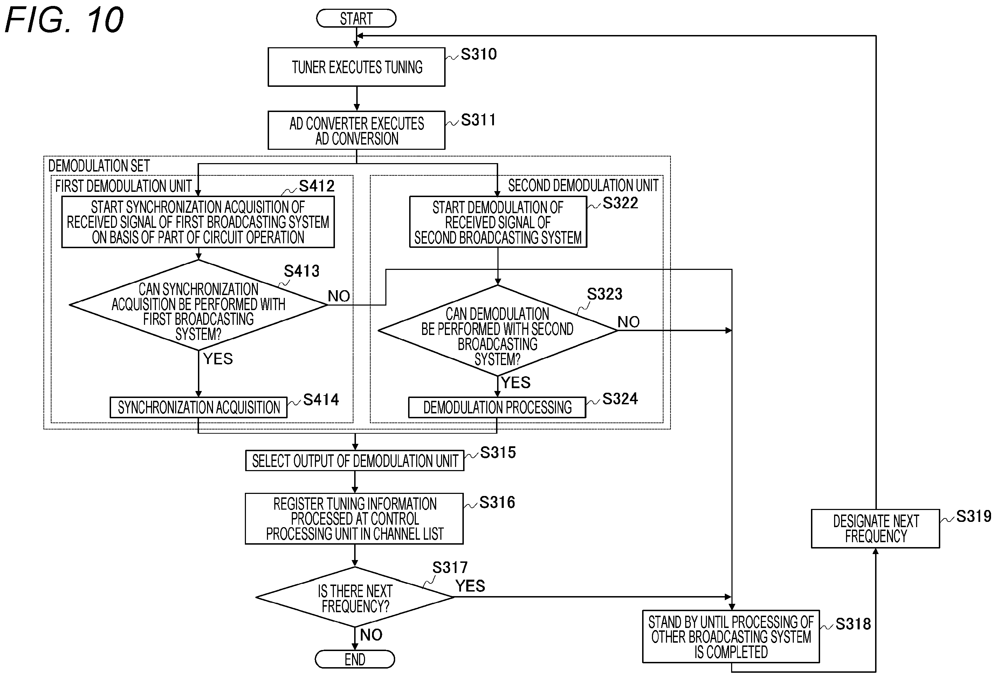

Fig. 10 is a flowchart indicating channel scanning operation of the reception device according to the sixth embodiment. Note that, although Fig. 10 illustrates an example in which the first demodulation unit 6611 performs synchronization acquisition and the second demodulation unit 6612 performs demodulation in channel scanning, the first demodulation unit 6611 may perform demodulation and the second demodulation unit 6612 may perform synchronization acquisition.

In the drawing, the channel scanning operation of the sixth embodiment includes processing from S412 to S414 instead of the processing from S312 to S314 of the fifth embodiment described above. The other processing of the channel scanning operation of the sixth embodiment is similar to the processing of the channel scanning operation of the fifth embodiment described above.

The AD converted value ID1 of the received signal IF1 is input in parallel to the first demodulation unit 6611 and the second demodulation unit 6612. Then, the first demodulation unit 6611 starts synchronization acquisition with the first broadcasting system on the basis of the AD converted value ID1 (S412). In this event, the first demodulation unit 6611 determines whether the synchronization acquisition can be performed with the first broadcasting system on the basis of the AD converted value ID1 by causing some circuits to operate (S413). In a case where synchronization acquisition can be performed with the first broadcasting system on the basis of the AD converted value ID1 by causing some circuits to operate, the first demodulation unit 6611 performs synchronization acquisition with the first broadcasting system (S414).

On the other hand, in a case where the synchronization acquisition cannot be performed with the first broadcasting system on the basis of the AD converted value ID1 by causing some circuits to operate, processing of the first demodulation unit 6611 stands by until the demodulation by the second demodulation unit 6612 is completed (S318).

As described above, in the sixth embodiment described above, in the demodulation operation in a configuration in which one tuner 111 is provided, the shared circuit 651 shared for demodulation with the first broadcasting system and the second broadcasting system is provided. This can reduce a circuit scale of the demodulation set 641 to be used for demodulation with the first broadcasting system and the second broadcasting system.

### <7. Seventh Embodiment>

In the first embodiment described above, in the demodulation operation in a configuration in which the plurality of tuners is provided, the demodulation processing of the received signal tuned by one tuner shared by the first broadcasting system and the second broadcasting system at the time of channel scanning is performed for each broadcasting system. In a seventh embodiment, the reception device is packaged for efficient mounting of the reception device.

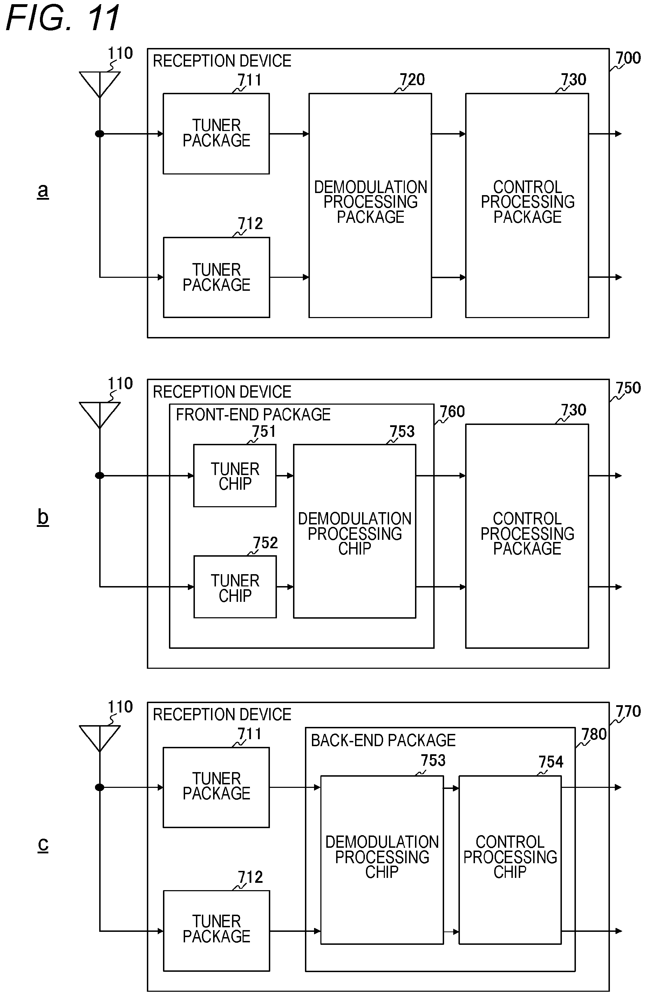

Fig. 11 is a block diagram illustrating a configuration example of the reception device according to the seventh embodiment. Note that a of Fig. 11 is a block diagram illustrating a first example of the reception device according to the seventh embodiment, b of Fig. 11 is a block diagram illustrating a second example of the reception device according to the seventh embodiment, and c of Fig. 11 is a block diagram illustrating a third example of the reception device according to the seventh embodiment.

In a of Fig. 11, a reception device 700 can be configured by packaging the reception device 100 of the first embodiment described above. The reception device 700 includes tuner packages 711, 712, a demodulation processing package 720, and a control processing package 730. Each of the tuner packages 711, 712 is connected to the antenna 110.

The tuners 111, 112, the demodulation processing unit 120, and the control processing unit 130 of the first embodiment described above are formed on separate semiconductor chips. In this event, the tuner package 711 is obtained by packaging a semiconductor chip on which the tuner 111 is formed. The tuner package 712 is obtained by packaging a semiconductor chip on which the tuner 112 is formed. The demodulation processing package 720 is obtained by packaging a semiconductor chip on which the demodulation processing unit 120 is formed. The control processing package 730 is obtained by packaging a semiconductor chip on which the control processing unit 130 is formed.

As described above, in the first example of the seventh embodiment, the tuners 111, 112, the demodulation processing unit 120, and the control processing unit 130 are separately packaged. This can make mounting of the reception device 700 on the set substrate efficient. In addition, even in a case where there is a defective product in any one of the tuners 111, 112, the demodulation processing unit 120, and the control processing unit 130, it is only necessary to replace the defective product, so that it is possible to eliminate the need to discard the entire reception device 700.

In b of the drawing, the reception device 750 includes a front-end package 760 and a control processing package 730. The front-end package 760 includes tuner chips 751, 752 and a demodulation processing chip 753. The tuners 111, 112 of the first embodiment described above are formed in the tuner chips 751, 752, respectively. In the demodulation processing chip 753, the demodulation processing unit 120 of the first embodiment described above is formed. In this event, the tuner chips 751, 752 and the demodulation processing chip 753 are packaged in the front-end package 760.

As described above, in the second example of the seventh embodiment, the tuner chips 751, 752 and the demodulation processing chip 753 are packaged in the front-end package 760. As a result, it is only necessary to mount the front-end package 760 and the control processing package 730 on the set substrate to incorporate the reception device 750 into a product, so that it is possible to make mounting of the reception device 750 on the set substrate efficient.

In c of the drawing, the reception device 770 includes tuner packages 711, 712 and a back-end package 780. The back-end package 780 includes a demodulation processing chip 753 and a control processing chip 754. In the control processing chip 754, the control processing unit 130 of the first embodiment described above is formed. In this event, the demodulation processing chip 753 and the control processing chip 754 are packaged in the back-end package 780.

As described above, in the third example of the seventh embodiment, the demodulation processing chip 753 and the control processing chip 754 are packaged in the back-end package 780. As a result, it is only necessary to mount the tuner packages 711, 712 and the back-end package 780 on the set substrate to incorporate the reception device 770 into a product, so that it is possible to make mounting of the reception device 750 on the set substrate efficient.

Note that, in the seventh embodiment described above, an example in which the reception device 100 of the first embodiment described above is packaged has been described. However, the reception devices 200 to 600 of the second to sixth embodiments described above may be packaged.

In addition, in the first embodiment and the fourth embodiment described above, a case where two demodulation sets are provided has been taken as an example. In the second embodiment and the third embodiment described above, a case where three demodulation sets are provided has been taken as an example. In the fifth embodiment and the sixth embodiment described above, a case where one demodulation set is provided has been taken as an example. In addition to these examples, the present invention may also be applied to a case where four or more demodulation sets are provided.

Furthermore, in the first to sixth embodiments described above, an example has been described where each demodulation set supports two broadcasting systems, but each demodulation set may support three or more broadcasting systems. In this event, each demodulation set may include three or more demodulation units supporting different broadcasting systems.

Note that the embodiments described above indicate examples for embodying the present technology, and the respective matters in the embodiments and the respective matters specifying the invention in the claims have correspondence relationships. Similarly, the matters specifying the invention in the claims and the matters with the same names in the embodiments of the present technology have correspondence relationships, respectively. However, the present technology is not limited to the embodiments, and can be embodied by making various modifications to the embodiments without departing from the scope of the present technology. Furthermore, effects described in the present specification are merely examples and are not limited, and other effects may be provided.

Note that the present technology may also have the following configuration.
(1) A reception device including
   a demodulation processing unit that confirms a broadcasting system with which demodulation can be performed among a plurality of broadcasting systems in parallel on the basis of a received signal from a tuner shared by the plurality of broadcasting systems at the time of channel scanning, and performs demodulation processing with the broadcasting system with which demodulation can be performed.
(2) The reception device according to (1), in which
   the demodulation processing unit switches a broadcasting system with which demodulation is to be performed on the basis of a result of confirmation as to whether a broadcasting system is the broadcasting system with which demodulation can be performed.
(3) The reception device according to (1) or (2), in which
   demodulation processing by the demodulation processing unit stands by until a channel frequency of the received signal is updated to the broadcasting system with which demodulation can be performed for a broadcasting system with which it is determined that demodulation cannot be performed.
(4) The reception device according to any one of (1) to (3), in which
   the demodulation processing unit includes
   a first demodulation unit that supports a first broadcasting system and
   a second demodulation unit that supports a second broadcasting system,
   a received signal tuned by the tuner at the time of the channel scanning is input in parallel to the first demodulation unit and the second demodulation unit,
   the first demodulation unit and the second demodulation unit confirm in parallel whether a broadcasting system is the broadcasting system with which demodulation can be performed by each of the first demodulation unit and the second demodulation unit,
   the first demodulation unit performs demodulation with the first broadcasting system on the basis of the received signal in a case where demodulation can be performed with the first broadcasting system, and
   the second demodulation unit performs demodulation with the second broadcasting system on the basis of the received signal in a case where demodulation can be performed with the second broadcasting system.
(5) The reception device according to any one of (1) to (4), further including a plurality of tuners provided corresponding to the plurality of broadcasting systems, in which
   the demodulation processing unit includes
   a plurality of first demodulation units that supports a first broadcasting system,
   a plurality of second demodulation units that supports a second broadcasting system, and
   a plurality of analog to digital (AD) converters provided corresponding to the plurality of tuners,
   any one of the plurality of tuners tunes a received signal of the first broadcasting system and the second broadcasting system, and
   an AD converter at a subsequent stage of the tuner that tunes the received signal an AD converted of the received signal.
(6) The reception device according to (5), in which
   the demodulation processing unit performs channel scanning for the plurality of broadcasting systems on the basis of tuning operation of tuners of a number smaller than the number of systems to be used for demodulation processing with the plurality of broadcasting systems at the time of normal reception.
(7) The reception device according to (5) or (6), in which
   at least one of the plurality of tuners is stopped in a state where at least one of the plurality of tuners is caused to operate at the time of the channel scanning.
(8) The reception device according to any one of (5) to (7), in which
   the demodulation processing unit performs demodulation processing of received signals of a plurality of broadcasting systems on the basis of tuning operation of any one tuner out of the plurality of tuners at the time of channel scanning for the plurality of broadcasting systems.
(9) The reception device according to any one of (1) to (8), in which
   the demodulation processing unit includes a shared circuit in which a circuit is shared by the plurality of broadcasting systems, and
   the demodulation processing unit performs confirmation as to whether a broadcasting system is the broadcasting system with which demodulation can be performed by using the shared circuit and confirmation as to whether synchronization acquisition can be performed by using some of the circuits in parallel.
(10) The reception device according to (5), further including:
   a first demodulation set including any one of the plurality of first demodulation units and any one of the plurality of second demodulation units as a set; and
   a second demodulation set including another one of the plurality of first demodulation units and another one of the plurality of second demodulation units as a set, in which
   the AD converter at the subsequent stage of the tuner that tunes the received signal inputs the AD converted value of the received signal to the first demodulation set and the second demodulation set in parallel.
(11) The reception device according to (10), in which
   the demodulation processing unit performs demodulation of two systems using two tuners for the first broadcasting system and the second broadcasting system at the time of normal reception, and
   performs demodulation of one system using one tuner shared by the first broadcasting system and the second broadcasting system at the time of channel scanning.
(12) The reception device according to (11), in which
   the demodulation processing unit switches to demodulation by the second demodulation unit of the first demodulation set in a case where it is determined that demodulation cannot be performed by the first demodulation unit of the first demodulation set at the time of channel scanning, and
   switches to demodulation by the second demodulation unit of the second demodulation set in a case where it is determined that demodulation cannot be performed by the first demodulation unit of the second demodulation set at the time of channel scanning.
(13) The reception device according to (10), in which
   the demodulation processing unit performs demodulation of two systems using two tuners shared by the first broadcasting system and the second broadcasting system at the time of channel scanning, and bands of channel frequencies to be respectively tuned by the two tuners are set to be different from each other.
(14) The reception device according to any one of (10) to (13), further including:
   a first shared circuit shared by the first demodulation unit and the second demodulation unit included in the first demodulation set; and
   a second shared circuit shared by the first demodulation unit and the second demodulation unit included in the second demodulation set.
(15) The reception device according to (14), in which
   the first demodulation set and the second demodulation set perform demodulation with different broadcasting systems at the time of channel scanning.
(16) The reception device according to any one of (10) to (15), further including:
   a first selector that selects an output from the plurality of AD converters and inputs the selected output to the first demodulation set; and
   a second selector that selects an output from the plurality of AD converters and inputs the selected output to the second demodulation set.
(17) The reception device according to any one of (10) to (16), further including:
   a control processing unit that controls operation of the plurality of tuners, the first demodulation set, and the second demodulation set; and
   a third selector that selects and input to the control processing unit any one of a demodulated signal of the first broadcasting system in the first demodulation set, a demodulated signal of the second broadcasting system in the first demodulation set, a demodulated signal of the first broadcasting system in the second demodulation set, and a demodulated signal of the second broadcasting system in the second demodulation set.
(18) The reception device according to any one of (10) to (17), further including:
   a first automatic gain control (AGC) unit that adjusts a level of a signal to be output from a first tuner out of the plurality of tuners;
   a second AGC unit that adjusts a level of a signal to be output from a second tuner out of the plurality of tuners;
   a fourth selector that selects any one of an output of the first AGC unit and an output of the second AGC unit and inputs the selected output to the first tuner; and
   a fifth selector that selects any one of the output of the first AGC unit and the output of the second AGC unit and inputs the selected output to the second tuner.
(19) A reception method including:
   confirming a broadcasting system with which demodulation can be performed among a plurality of broadcasting systems in parallel on the basis of a received signal from a tuner shared by the plurality of broadcasting systems at the time of channel scanning; and
   performing demodulation processing with the broadcasting system with which demodulation can be performed.

### REFERENCE SIGNS LIST

100 Reception device
110 Antenna
111, 112 Tuner
120 Demodulation processing unit
121, 122 AD converter
130 Control processing unit
131, 132, 181, 191, 192 Selector
141, 142 Demodulation set
151, 152 Shared circuit
1611, 1621 First demodulation unit
1612, 1622 Second demodulation unit
171, 172 AGC unit

## Claims

1. A reception device comprising
a demodulation processing unit that confirms a broadcasting system with which demodulation can be performed among a plurality of broadcasting systems in parallel on a basis of a received signal from a tuner shared by the plurality of broadcasting systems at a time of channel scanning, and performs demodulation processing with the broadcasting system with which demodulation can be performed.

2. The reception device according to claim 1, wherein
the demodulation processing unit switches a broadcasting system with which demodulation is to be performed on a basis of a result of confirmation as to whether a broadcasting system is the broadcasting system with which demodulation can be performed.

3. The reception device according to claim 1, wherein
demodulation processing by the demodulation processing unit stands by until a channel frequency of the received signal is updated to the broadcasting system with which demodulation can be performed for a broadcasting system with which it is determined that demodulation cannot be performed.

4. The reception device according to claim 1, wherein
the demodulation processing unit includes
a first demodulation unit that supports a first broadcasting system, and
a second demodulation unit that supports a second broadcasting system,
a received signal tuned by the tuner at the time of the channel scanning is input in parallel to the first demodulation unit and the second demodulation unit,
the first demodulation unit and the second demodulation unit confirm in parallel whether a broadcasting system is the broadcasting system with which demodulation can be performed by each of the first demodulation unit and the second demodulation unit,
the first demodulation unit performs demodulation with the first broadcasting system on a basis of the received signal in a case where demodulation can be performed with the first broadcasting system, and
the second demodulation unit performs demodulation with the second broadcasting system on a basis of the received signal in a case where demodulation can be performed with the second broadcasting system.

5. The reception device according to claim 1, further comprising a plurality of tuners provided corresponding to the plurality of broadcasting systems, wherein
the demodulation processing unit includes
a plurality of first demodulation units that supports a first broadcasting system,
a plurality of second demodulation units that supports a second broadcasting system, and
a plurality of analog to digital (AD) converters provided corresponding to the plurality of tuners,
any one of the plurality of tuners tunes a received signal of the first broadcasting system and the second broadcasting system, and
an AD converter at a subsequent stage of the tuner that tunes the received signal inputs an AD converted value of the received signal to the first demodulation unit and the second demodulation unit in parallel.

6. The reception device according to claim 5, wherein
the demodulation processing unit performs channel scanning for the plurality of broadcasting systems on a basis of tuning operation of tuners of a number smaller than the number of systems to be used for demodulation processing with the plurality of broadcasting systems at a time of normal reception.

7. The reception device according to claim 6, wherein
at least one of the plurality of tuners is stopped in a state where at least one of the plurality of tuners is caused to operate at the time of the channel scanning.

8. The reception device according to claim 6, wherein
the demodulation processing unit performs demodulation processing of received signals of a plurality of broadcasting systems on a basis of tuning operation of any one tuner out of the plurality of tuners at a time of channel scanning for the plurality of broadcasting systems.

9. The reception device according to claim 1, wherein
the demodulation processing unit includes a shared circuit in which a circuit is shared by the plurality of broadcasting systems, and
the demodulation processing unit performs confirmation as to whether a broadcasting system is the broadcasting system with which demodulation can be performed by using the shared circuit and confirmation as to whether synchronization acquisition can be performed by using some of the circuits in parallel.

10. The reception device according to claim 5, further comprising:
a first demodulation set including any one of the plurality of first demodulation units and any one of the plurality of second demodulation units as a set; and
a second demodulation set including another one of the plurality of first demodulation units and another one of the plurality of second demodulation units as a set, wherein
the AD converter at the subsequent stage of the tuner that tunes the received signal inputs the AD converted value of the received signal to the first demodulation set and the second demodulation set in parallel.

11. The reception device according to claim 10, wherein
the demodulation processing unit
performs demodulation of two systems using two tuners for the first broadcasting system and the second broadcasting system at a time of normal reception, and
performs demodulation of one system using one tuner shared by the first broadcasting system and the second broadcasting system at a time of channel scanning.

12. The reception device according to claim 10, wherein
the demodulation processing unit
switches to demodulation by the second demodulation unit of the first demodulation set in a case where it is determined that demodulation cannot be performed by the first demodulation unit of the first demodulation set at a time of channel scanning, and
switches to demodulation by the second demodulation unit of the second demodulation set in a case where it is determined that demodulation cannot be performed by the first demodulation unit of the second demodulation set at a time of channel scanning.

13. The reception device according to claim 10, wherein
the demodulation processing unit performs demodulation of two systems using two tuners shared by the first broadcasting system and the second broadcasting system at a time of channel scanning, and bands of channel frequencies to be respectively tuned by the two tuners are set to be different from each other.

14. The reception device according to claim 11, further comprising:
a first shared circuit shared by the first demodulation unit and the second demodulation unit included in the first demodulation set; and
a second shared circuit shared by the first demodulation unit and the second demodulation unit included in the second demodulation set.

15. The reception device according to claim 11, wherein
the first demodulation set and the second demodulation set perform demodulation with different broadcasting systems at a time of channel scanning.

16. The reception device according to claim 11, further comprising:
a first selector that selects an output from the plurality of AD converters and inputs the selected output to the first demodulation set; and
a second selector that selects an output from the plurality of AD converters and inputs the selected output to the second demodulation set.

17. The reception device according to claim 11, further comprising:
a control processing unit that controls operation of the plurality of tuners, the first demodulation set, and the second demodulation set; and
a third selector that selects and inputs to the control processing unit any one of a demodulated signal of the first broadcasting system in the first demodulation set, a demodulated signal of the second broadcasting system in the first demodulation set, a demodulated signal of the first broadcasting system in the second demodulation set, and a demodulated signal of the second broadcasting system in the second demodulation set.

18. The reception device according to claim 11, further comprising:
a first automatic gain control (AGC) unit that adjusts a level of a signal to be output from a first tuner out of the plurality of tuners;
a second AGC unit that adjusts a level of a signal to be output from a second tuner out of the plurality of tuners;
a fourth selector that selects any one of an output of the first AGC unit and an output of the second AGC unit and inputs the selected output to the first tuner; and
a fifth selector that selects any one of the output of the first AGC unit and the output of the second AGC unit and inputs the selected output to the second tuner.

19. A reception method comprising:
confirming a broadcasting system with which demodulation can be performed among a plurality of broadcasting systems in parallel on a basis of a received signal from a tuner shared by the plurality of broadcasting systems at a time of channel scanning; and
performing demodulation processing with the broadcasting system with which demodulation can be performed.
